# EUROPEAN PATENT SPECIFICATION

(11) **EP 2 183 941 B1**
(45) Date of publication and mention of the grant of the patent: **07.12.2011**
(21) Application number: 08798851.5
(22) Date of filing: 28.08.2008
(51) Int. Cl.: H04W 84/00

(54) **INTERACTIVE SHORT MESSAGING SERVICE**
INTERAKTIVER KURZNACHRICHTENDIENST
SERVICE DE MESSAGES COURTS INTERACTIF

(30) Priority: 30.08.2007 US 966819 P
(43) Date of publication of application: 12.05.2010
(73) Proprietor: Brainstorm SMS Technologies, LLC, Pittsburgh, PA 15213 (US)
(72) Inventor: DAMARLA, Chanakya, C., Pittsburgh, Pennsylvania 15206 (US); HOSTENY, Joseph, N., Pittsburgh, Pennsylvania 15213 (US)
(74) Representative: Röthinger, Rainer
(86) International application number: PCT/US2008/074570
(87) International publication number: WO 2009/029701

(56) References cited:
- WO-A2-03/053083
- US-A1- 2003 114 174
- US-A1- 2005 278 425
- US-A1- 2006 101 153
- US-A1- 2006 126 806
- US-A1- 2007 142 029
- US-A1- 2007 142 029

## Description

Field of The Invention

The present invention relates to session management systems and methods that enable users of two-way electronic messaging systems, such as SMS (Short Messaging System), Email or IM (Instant Messaging), to simultaneously interact with multiple applications. The invention has particular, although not exclusive, application to simultaneously linking users with SMS-enabled mobile devices to multiple web-based applications.

Description of Related Art

Short Message Service (SMS) or "text messaging" was initially implemented as a "back channel," for cellular telephone carriers, for signaling a cellular telephone of events such as voice mail. SMS later became used as a mechanism for users to send short messages (in text format) to each other. As of late, SMS is being used in a business-consumer model to "push" content (advertisements, coupons and ring tones) to consumers.

However, the use of SMS in more sophisticated applications is limited because SMS does not support a generic and flexible session management system. This is a byproduct of the fact that SMS was originally intended as a one way messaging system. While, SMS was later extended to allow simple responses, full session management functionality was never added to it. As a result SMS does not provide a way for applications to maintain ongoing discussions or sessions with a user over multiple, out-of-sequence message exchanges.

The lack of a flexible session-management system hinders the development of fully interactive SMS data applications. The core problem is that inter- and intra-application state cannot be properly managed by present message routing / application integration systems in the art without placing an undue burden on either users or application developers.

Two major techniques have been developed, to enable "interesting" applications over SMS: Keyword routing systems and Address routing systems. Both methods do not provide the flexibility that we desire.

Keyword routing systems use the contents of a user's message to maintain state/session information. Users wishing to send messages to specific applications or to invoke specific actions on applications must type in enough information into their messages in order to uniquely identify the application or the action on the application to invoke. For example, user messages beginning with "GAME1" can be routed to the GAME1 application and messages beginning with "GAME2" can be routed to the GAME2 application. Similarly, it is possible to invoke specific actions on an application by combining an application ID and an action ID. So, for example, users messages beginning with "GAME1: ACTION1" can be routed to Action 1 action in the GAME1 application. Keyword routing systems place an undue burden on consumers by requiring them to remember and type in keywords for every response they send an application. This is not a trivial task given the form factors of mobile devices. Because these systems place a heavy burden on users, they can cause significant user confusion and errors.
Address based routing systems use different addresses to encode state/session information. Applications are assigned a set of reply-to-addresses. Then, applications use these addresses to encode state/session information. For example, an application may know that incoming responses to ADDR1 invoke a callback 1 and incoming responses to ADDR2 invoke a callback 2 and so forth. Address based routing systems place an undue burden on application providers. When using an address based routing system, application developers must maintain state utilizing the application's set of assigned "reply-to" addresses. This requires application developers to assign "reply-to" addresses for each message they generate and properly associate the correct action with the various possible replies to this message. Further, they have to implement policies for how long to persist these associations and when and how to reuse a previously used address. These policies are non-trivial and when implemented incorrectly may cause user confusion or place applications in awkward states. Further, these systems use the total address space inefficiently because applications must be assigned a set of addresses in advance so they can be developed appropriately. So while a user may only use ten applications his whole address spaces is allocated to all the applications registered with the address routing system.
US 2007/0142029 A1 may be construed to disclose a method and a system according to the preambles of claims 1 and 12.
WO 03/053083 A2 may be construed to disclose messaging between session ignition protocol (SIP) users and mobile telephone users. The messaging is simplified by providing a set of temporary addresses according to the second standard that can be assigned as identifiers of the first user. A temporary address is assigned to a SIP user who sends an instant message to a mobile user. The temporary address and the second subscriber's address then form a unique identification of the first user. A gateway is disclosed comprising a table mapping the address of said first user according to the first addressing standard, the address of said second user according to the second addressing standard, and a temporarily assigned address used to identify the first user.
It would, therefore, be desirable to provide a system and method that overcomes the above problems and others.

### SUMMARY OF THE INVENTION

The invention of claim 1 is a method of session based communications. The method includes (a) storing a set of unallocated reply-to addresses that are freely assignable; (b) assigning a first unallocated reply-to address from the set thereof to a first message dispatched from a first application; (c) routing a reply to the first message to the first application utilizing the reply-to address assigned thereto in step (b); (d) assigning a second unallocated reply-to address from the set thereof to a second message dispatched from the first application; and (e) routing a reply to the second message to the first application utilizing the reply-to address assigned thereto in step (d).

Preferably, the method can further include (f) assigning a third unallocated reply-to address from the set thereof to a first message dispatched from a second application; (g) routing a reply to the first message of step (f) to the second application utilizing the reply-to address assigned thereto in step (f); (b) assigning a second unallocated reply-to address from the set thereof to a second message dispatched from the second application; and (i) routing a reply to the second message of step (h) to the second application utilizing the reply-to address assigned thereto in step (h).

Preferably, the reply-to addresses can includes one of the following: email addresses, shorts codes, short codes with an appended suffixes or prefixes, telephone numbers or instant messaging (IM) addresses.

The invention is also a method of session based communications. The method includes (a) storing a set of unallocated reply-to addresses that are freely assignable; (b) assigning a first unallocated reply-to address from the set thereof to a first message dispatched from a first application; (c) assigning a second unallocated reply-to address from the set thereof to a first message dispatched from a second application; (d) routing a reply to the first message to the first application utilizing the reply-to address assigned thereto in step (b); and (e) routing a reply to the second message to the second application utilizing the reply-to address assigned thereto in step (c).

Preferably, the method can further include (f) assigning a third unallocated reply-to address from the set thereof to a second message dispatched from one of the first or second applications; (g) routing a reply to the second message of step (f) to the one of the first and second applications utilizing the reply-to address assigned thereto in step (f); (h) assigning a fourth unallocated reply-to address from the set thereof to a second message dispatched from the other of the first or second applications; and (g) routing a reply to the second message of step (h) to the other of the first and second applications utilizing the reply-to address assigned thereto in step (h).

The invention is also a system of session-based communications of claim 14. The system includes first means operative for hosting an application that is operative for generating a first mobile terminated message that includes first data regarding an intended recipient of the message, data regarding the application that output the message, and text. The system also includes second means responsive to the first mobile terminated message for: storing the data regarding the application that output the first mobile terminated message; assigning to the first mobile terminated message a reply-to-address selected from a set of unallocated reply-to-addresses that have no restrictions on their assignment; constructing from the first mobile terminated message a second mobile terminated message that includes the text, the assigned reply-to-address and either the first data regarding the intended recipient or second data regarding the intended recipient derived from the first data regarding the intended recipient, but which excludes the data regarding the application that output the message; and outputting the second mobile terminated message for delivery of the text of the message to an SMS capable device associated with the first or second data regarding the intended recipient

Preferably, the second means can be further responsive to a first mobile originated message generated by the SMS capable device that includes data in reply to the text and the reply-to-address for constructing from the first mobile originated message a second mobile originated message that includes the data in reply to the text.

Preferably, the second means can be further operative for outputting the second mobile terminated message for delivery thereof to the application hosted by the first means for hosting based on the reply-to-address assigned to the data regarding the application that output the first mobile terminated message.

Preferably, the invention is also a method of session-based communications. The method includes (a) storing a set of unallocated reply-to addresses that are freely assignable; (b) storing a first set of response-callback bindings for a first message dispatched from a first application; (c) assigning a first unallocated reply-to address from the set of unallocated reply-to-addresses to the first message dispatched from the first application; (d) in response to a reply to the first message from the first application, invoking a callback on the first applicationbased on the first reply-to-address and a content of the reply; (e) storing a second set of response-callback bindings for a second message dispatched from the first application; (f) when the first set of response-callback bindings do not have a conflict with the second set of response-callback bindings, assigning the first reply-to-address to the second message dispatched from the first application, otherwise, assigning a second unallocated reply-to address from the set of unallocated reply-to-addresses to the second message dispatched from the first application; and (g) in response to a reply to the second message from the first application, invoking a callback on the first application based on the reply-to-address assigned thereto in step (f) and a content of the reply.

Preferably, the method can further include (h) storing a third set of response-callback bindings for a third message dispatched from a second application; (i) assigning a third unallocated reply-to address from the set thereof to the third message dispatched from the second application; (j) in response to a reply to the third message from the second application, invoking a callback on the second application based on the third reply-to-address and a content of the reply; (k) storing a fourth set of response-callback bindings for a fourth message dispatched from the second application; (l) when the third set of response-callback bindings do not have a conflict with the fourth set of response-callback bindings, assigning the third reply-to-address to the fourth message dispatched from the second application, otherwise, assigning a fourth unallocated reply-to address from the set of unallocated reply-to-addresses to the fourth message dispatched from the second application; and (m) in response to a reply to the fourth message from the second application, invoking a callback on the second application based on the reply-to-address assigned thereto in step (l) and a content of the reply.

Preferably, the invention is also a method of session-based communications. The method includes (a) storing a set of unallocated reply-to addresses that are freely assignable; (b) storing a first set of response-callback bindings for a first message dispatched from a first application; (c) assigning a first unallocated reply-to address from the set of unallocated reply-to-addresses to the first message dispatched from the first application; (d) storing a second set of response-callback bindings for a second message dispatched from a second application; (e) assigning a second unallocated reply-to address from the set of unallocated reply-to-addresses to the second message dispatched from the second application; (f) in response to a reply to the first message dispatched from the first application, invoking a callback on the first application based on the first reply-to-address and a content of the reply; and (g) in response to a reply to the second message dispatched from the second application, invoking a callback on the second application based on the second reply-to-address and a content of the reply.

Preferably, the method can further include (h) storing a third set of response-callback bindings for a third message dispatched from one of the first application or the second application; (i) when the response-callback bindings stored in step (b) or step (d) and step (h) do not have a conflict, assigning either the first or second reply-to-address previously allocated in step (c) or step (e) to the third message dispatched in step (h), otherwise assigning a third unallocated reply-to-address from the set unallocated reply-to-addresses to the third message dispatched in step (h); (j) in response to a reply to the third message, invoking a callback on the first application or second application based on the reply-to-address assigned thereto in step (i) and a content of the reply; (k) storing a fourth set of response-callback bindings for a fourth message dispatched from the other of the first application or the second application; (l) when the response-callback bindings stored in step (b) or step (d) and step (k) do not have a conflict, assigning either the first or second reply-to-address previously allocated in step (c) or step (e) to the fourth message dispatched in step (k), otherwise assigning a fourth unallocated reply-to-address from the set of unallocated reply-to-addresses to the fourth message dispatched in step (k); (m) in response to a reply to the fourth message invoking a callback on the other of the first application or second application based on reply-to-address assigned thereto in step (1) and a content of the reply.

Lastly, the invention is a system of session-based communications. Preferably, the system includes means for generating a first mobile terminated message that includes first data regarding an intended recipient of the message, data regarding the application that output the message, and text; and means responsive to the first mobile terminated message for: storing the data regarding the application that output the first mobile terminated message; assigning to the first mobile terminated message a reply-to-address selected from a set of unallocated reply-to-addresses that have no restrictions on their assignment; constructing from the first mobile terminated message a second mobile terminated message that includes the text, the assigned reply-to-address and either the first data regarding the intended recipient or second data regarding the intended recipient derived from the first data regarding the intended recipient, but which excludes the data regarding the application that output the message; and outputting the second mobile terminated message for delivery of the text of the message to a device associated with the first or second data regarding the intended recipient.

Preferably, the means responsive to the first mobile terminated message can be further responsive to a first mobile originated message generated by the device, the first mobile originated message including data in reply to the text and the reply-to-address for constructing from the first mobile originated message a second mobile originated message that includes the data in reply to the text.

Preferably, means responsive to the first mobile terminated message can be further operative for outputting the second mobile terminated message for delivery thereof to the application hosted by the means for generating the first mobile terminated message based on the reply-to-address assigned to the data regarding the application that output the first mobile terminated message.

### BRIEF DESCRIPTION OF THE DRAWINGS

Fig. 1 is a block diagram of a system for implementing a method of the present invention;

Fig. 2 is an illustration of the fields of an exemplary short message service (SMS) Message;

Fig. 3 is an illustration of the fields of an exemplary implementation SMS Message;

Fig. 4 is an illustration of the fields of an exemplary application SMS Message;

Fig. 5 is an illustration of the fields of an exemplary application callback;

Fig. 6 is a flow diagram of a "user-initiated" interaction sequence in accordance with the present invention; and

Fig. 7 is a flow diagram of a "application initiated" interaction sequence in accordance with the present invention.

### DETAILED DESCRIPTION OF THE INVENTION

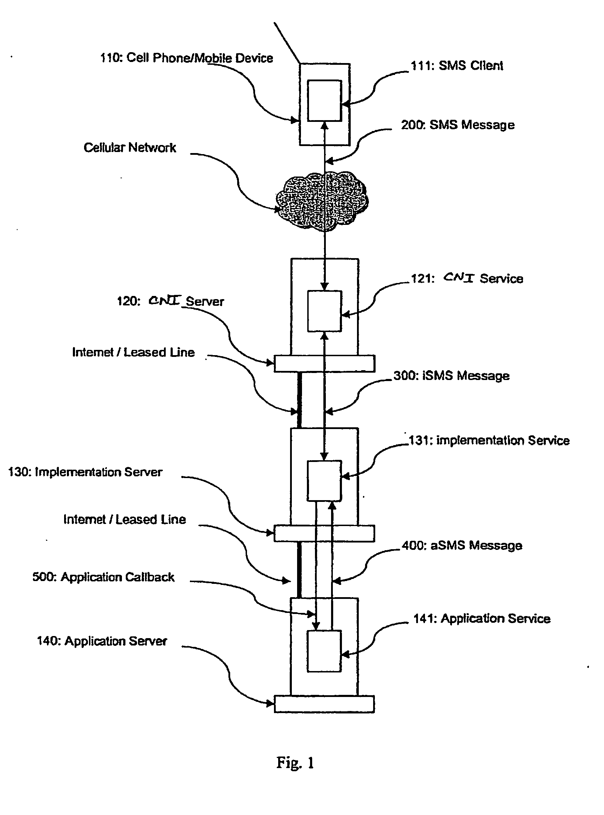

With reference to Fig. 1 is a block diagram of a system for implementing a method of the present invention. The system includes a Cell Phone/Mobile Device 110. Cell Phone/Mobile Device 110 hosts a software component called SMS Client 111. Each mobile user of a Cell Phone/Mobile Device 110 utilizes SMS Client 111 to send and receive SMS messages 200. These messages may be communications with other users or communications with data applications.

Cellular Network Interface Server (CNI Server) 120 hosts Cellular Network Interface Service (CNI Service) 121. Herein, the CNI Server 120 and CNI Service 121 are used to encapsulate the many, potentially geographically distributed, components that may be used to facilitate SMS communications between SMS Clients 111 and between SMS Clients 111 and data applications. Accordingly, the description of CNI server 120 and CNI Service 121 are not to be construed as limiting the invention.

Specifically, most cellular networks have a Short Message Service Center (SMSC) that enables SMS traffic. All SMS Messages 200 within a cellular network are forwarded to that network's SMSC Service. This service delivers SMS Messages 200 via a store-forward mechanism to a cell phone or a data application. In the present discussion the SMSC Service is considered to be a part of CNI Service 121.

In addition, many cellular networks have Email Gateways that enable applications to send SMS Messages 200 using various mail protocols such as SMTP or POP3. For example, to send an SMS message to a user on the Sprint cellular network it is possible to send an email to the address <NUMBER>@messaging.sprintpcs.com. Upon receiving this incoming email, the Sprint Email Gateway communicates with the Sprint network's SMSC Service in order to actually transmit an SMS Message 200 to the user. User replies to this SMS Message 200 are first forwarded to the Sprint network's SMSC Service, which forwards the reply to the email gateway which in turn forwards the reply to the originating application using email. Similar gateways also exist for instant messenger services. Herein, Email Gateways and IM Gateways, if present, are considered part of CNI Service 121.

Finally, it is common for application developers to use so-called SMS aggregators, such as mBlox in the United States, as a single interface point to the major carriers. If an SMS aggregator is being used, an application wishing to send an SMS Message 200 to a mobile user would first forward the message to the SMS aggregator. The SMS aggregator would then forward this message to the appropriate SMSC service that is part of CNI Service 121 herein, i.e. the SMSC service associated with the user's cellular network. The SMSC service then forwards this message to the user's SMS Client 111. Each user reply to this SMS message will first be forwarded to the user's cellular network's SMSC Service, part of CNI Service 121 herein, which then forwards the reply to the SMS aggregator which in turn forwards the reply to the originating application. Herein, all components associated with SMS aggregators, if present, are considered part of CNI Service 121.

As can be seen CNI Service 121 may comprise many, potentially geographically dispersed, components. Herein, CNI Service 121 can be considered a black box that facilitates SMS communications between SMS Clients 111 and between SMS Clients 111 and data applications. In order to properly perform its routing functionality CNI Service 121 is appropriately configured and may perform address translation as explained later in this disclosure.

An Implementation Server 130 hosts a software component called an Implementation Service 131. Herein, SMS Messages 200 originating from or bound to data applications are first processed by the Implementation Service 131. Implementation Service 131 may optionally include a database that is used to store information important to its proper functioning.

Lastly, an Application Server 140 hosts one or more Application Services 141. Each Application Service 141 implements application-specific logic, generates all application specific content sent to users and performs the appropriate logic in response to incoming user messages/replies. Application Service 141 may optionally include a database that is used to store information important to its proper functioning.

Cell Phone/Mobile Device 110 is connected to CNI Server 120 via a cellular network, such as a CDMA, TDMA or GSM network. Based on the network being used, SMS Client 111 and CNI Service 121 communicate with each other utilizing various well-known SMS Message/Transport protocols that define message formats, message routing and connection provisioning. These standards are specified by the GSM community and may be found at www.etsi.org.

Regardless of the exact cellular network connecting Cell Phone/Mobile Device 110 to CNI Server 120 or the exact SMS Message/Transport protocols connecting SMS Client 111 to CNI Service 121, SMS Messages 200 are transmitted between SMS Clients 111 and CNI Services 121.

For the purposes of clarity messages that are transmitted from SMS Client 111 are called Mobile Originated SMS Messages. Messages that are transmitted to SMS Client 111 are called Mobile Terminated SMS Messages.

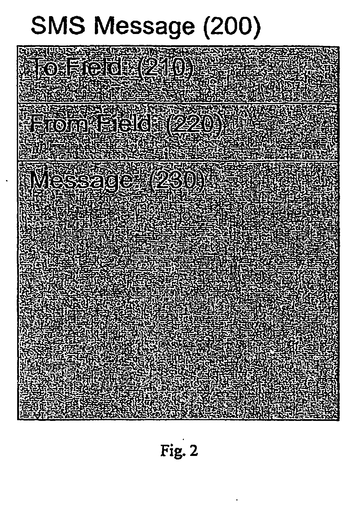

Fig. 2 illustrates fields that all SMS Messages 200 include. As can be seen, an SMS Messages 200 includes three major fields. A To Field 210 identifies the intended recipient of a message. When the recipient of the message is a mobile client this field is typically the client's mobile cell phone number. When the recipient of the message is an application, this field is typically a short code or a short code with an appended suffix. A From Field 220 identifies the sender of the message. When the sender is a mobile client, the From Field 220 is typically the mobile client's mobile cell phone number. When the sender is an application, the From Field 220 is typically a short code or a short code with an appended suffix. A Message Field 230 identifies the content of the SMS Message 200. This content is what is displayed on the display of Cell Phone/Mobile Device 110 by the mobile user's SMS Client 111 or is what a data applications processes to respond to user queries.

Each SMS Client 111 forwards all mobile originated SMS Messages 200 to its cellular network's CNI Service 121. CNI Service 121 routes received mobile originated SMS Messages 200 to the appropriate place based on To Field 210 of received mobile originated SMS Message 200. If To Field 210 is a cellular telephone number on this CNI Service's 121 cellular network, it locates the client within the cellular network and forwards the message to the SMS Client 111. If the To Field 210 is a cellular telephone number on a different cellular network, CNI Service 121 forwards the message to this other cellular network's CNI Service 121. This other cellular network's CNI Service 121 then locates the client within its cellular network and forwards the message to the SMS Client 111. If the To Field 210 is a short code, a short code with an appended suffix or is associated with data application, CNI Service 121 forwards the mobile originated SMS Message 200 to the data application using a preconfigured transport and communications protocol. Herein, all mobile originated SMS Messages 200 that are intended for data applications are first forwarded to Implementation Service 131 for processing.

CNI Server 120 and Implementation Server 130 can be connected to each other via a dedicated leased line, via the internet and/or in any other suitable/desirable manner. However, this is not to be construed as limiting the invention since it is envisioned that CNI Server 120 and Implementation Server 130 can be connected in communication with each other via any suitable and/or desirable communication medium that facilitates communication therebetween. For the purpose of the following description, the communication medium between CNI Server 120 and Implementation Server 130 will be described as being a physical connection. However, this is not to be construed as limiting the invention.

Over this connection, CNI Service 121 and the Implementation Service 131 communicate with each other utilizing various transport and communications protocols such as, without limitation, HTTP: for web based communications; (described at www.w3c.org.); SMTP for e-mail based communications (described at www.ieee.org); and SMPP for Short Message Peer-to-Peer based communications (described at www.etsi.org). Regardless of the exact protocol being used for communication between CNI Service 121 and Implementation Service 131, Implementation SMS Messages (iSMS Messages) 300 are transmitted between CNI Service 121 and Implementation Service 131.

For the purposes of clarity iSMS Messages transmitted from CNI Service 121 to Implementation Service 131 are called Mobile Originated iSMS Messages. iSMS Messages transmitted from Implementation Service 131 to CNI Service 121 are called Mobile Terminated iSMS Messages.

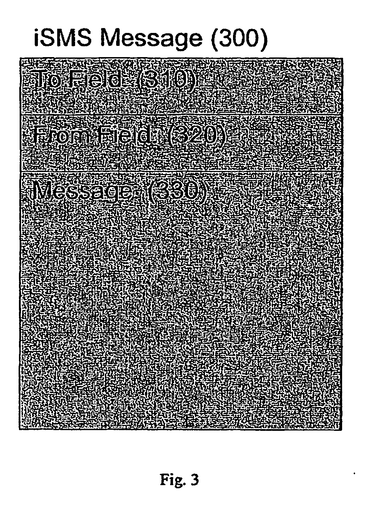

Fig. 3 illustrates fields that all iSMS Messages 300 include. iSMS Messages 300 are very similar to SMS Messages 200. However, a distinction is made between iSMS Messages 300 and SMS Messages 200 because they may contain different information based on the components that comprise CNI Service 121 and the transport and communications protocols connecting CNI Services 121 and Implementation Services 131.

In order for CNI Service 121 to forward messages to data applications in general and Implementation Services 131 in particular, CNI Service 121 is appropriately configured. CNI Service 121 desirably maintains bindings between "addresses" and Implementation Services 131. These "addresses" may be short codes, short codes with appended suffixes, email addresses or IM addresses. In addition, because Implementation Service 131 utilizes a set of reply-to addresses (described hereinafter), in order to maintain state/session information CNI Service 121 is desirably configured to associate each of these "addresses" from an Implementation Service's 131 reply-to-address space with it.

CNI Service 121 is desirably configured to associate a specific short code with a given Implementation Service 131. When CNI Service 121 receives a mobile originated SMS Message 200 where To Field 210 is this configured short code, CNI Service 121 converts the mobile originated SMS Message 200 to mobile originated iSMS Message 300 and forwards it to Implementation Service 131 previously configured with the given short code. This conversion produces mobile originated iSMS Message 300 appropriate for the transport and communications protocols connecting CNI Service 121 and Implementation Service 131.

Further, if a given network allows suffixes to be appended to a short code, the CNI Service 121 is desirably configured to associate all or some of these possible "extended" short codes with a given Implementation Service 131. When CNI Service 121 receives a mobile originated SMS Message 200 where the "To" Field is one of these configured extended short codes, CNI Service 121 converts the mobile originated SMS Message 200 to a mobile originated iSMS Message 300 and forwards it to Application Service 131 previously configured with the given extended short code. This conversion produces mobile originated iSMS Message 300 appropriate for the transport and communications protocols connecting CNI Service 121 and Implementation Service 131.

Pre-configuring CNI Service 121 to associate addresses with data applications or Implementation Service 131 is not strictly necessary. For example, in some transport and communications protocols, such as email or IM, where the email or IM addresses in the To and From Fields are sufficient for CNI Service 121 to route messages appropriately, such configuration is not necessary. However in these cases address translation may be necessary. For example, Implementation Service 131 may communicate with CNI Service 121 using email. In this case, iSMS Messages 300 transmitted between Implementation Service 131 and CNI Service 121 will be email messages. This means that the To Fields 310 and From Fields 320 of these iSMS Messages 300 will be email addresses. For mobile terminated iSMS messages, CNI Service 121 will take these email addresses and "translate" them into suitable SMS Message To Fields 210 and From Fields 220. This can be done, for example, by converting the iSMS Message's To Field 310 to a mobile cell phone number and assigning a unique short-code plus some optional suffix for the iSMS Message's From Field 320.

Suppose that CNI Service 121 receives a mobile terminated email iSMS Message 300 with the To Field 310 set to <NUMBER>@messaging.sprintpcs.com and the From Field 320 set to ADDR1@implementationservice.com. In this case, CNI Service 121 desirably generates a mobile terminated SMS Message 200 for transmission over the cellular network by setting the SMS Message's 200 To Field 210 to <NUMBER> and setting the SMS Message's 200 From Field 220 to some short code plus an appended suffix, e.g., BRFOO:00001. CNI Service 121 then transmits this mobile terminated SMS Message 200 to the SMS Client 111 associated with the user <NUMBER>.

When a mobile originated message in reply to this mobile terminated SMS Message 200 arrives, CNI Service 121 performs the "reverse address translation" and generates mobile originated iSMS Message 300 with email addresses as the To Field 310 and From Field 320. In the above example, user replies to the mobile terminated SMS Message 200 will have a To Field of BRFOO:00001 and From Field of <NUMBER>. CNI Service 121 will now generate a mobile originated iSMS Message 300 with the To Field 310 set to ADDR1@implementationService.com and the From Field 320 set to <NUMBER>@messaging.sprintpcs.com, and will mail this generated mobile originated iSMS Message 300. In this case, Implementation Service 131 desirably monitors a specific set of email-addresses on an email server and responds when messages arrive in the associated mailboxes.

Implementation Server 130 and Application Server 140 can be connected to each other via a dedicated leased line, an internet connection and/or any other suitable/desirable manner. Over this connection, Implementation Service 131 and the Application Service 141 communicate with each other utilizing various protocols. These protocols can be utilized in a synchronous or an asynchronous manner and can include HTTP, RMI, SOAP, or CORBA. Regardless of the exact protocol being used for communication between Implementation Service 131 and Application Service 141, Application SMS Messages (aSMS Messages) 400 are transmitted from Application Service 141 to Implementation Service 131 and Application Callbacks 500 are transmitted/invoked by Implementation Service 131 to/on Application Service 141.

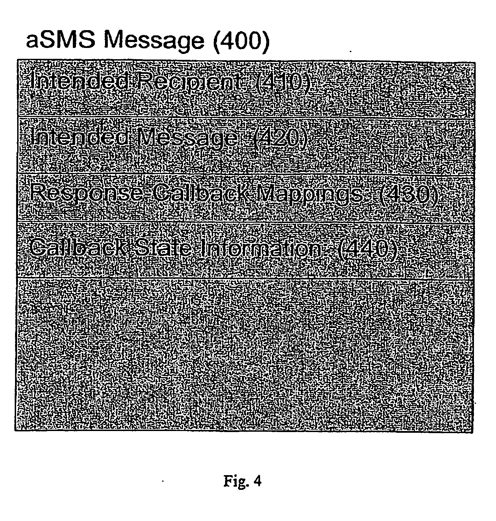

Fig. 4 shows the four fields of an aSMS Message.

A. Intended Recipient 410 field:

Intended Recipient 410 field is used to communicate who a message should be delivered to. This may be the cellular telephone number of a mobile user or it may be some obfuscated information that Implementation Service 131 can utilize to obtain the cellular telephone number of the mobile user. For privacy reasons, it may be desirable to use only obfuscated information in Intended Recipient 410 field. This field may not be strictly required in all cases. For example, if Implementation Service 131 is invoking a callback on an Application Service 141 on behalf of a specific user in a synchronous manner, Application Service 141 may not need to transmit this information as Implementation Service 131 presumably already knows the intended recipient of the message.

B. Intended Message 420 field:

Intended Message 420 field is the contents of a message. The Intended Message may be plain text or it may be parsed/extracted from content in various formats. For example if HTTP/HTML is used to connect Implementation Service 131 and Application Service 141, then Intended Message 420 may need to be extracted from HTML delivered by Application Service 141. For example, SMS Message's Message Field 230 may be extracted from HTML in a manner similar to how a text-browser represents HTML as text.

C. Response - Callback Mappings 430 field:

Response - Callback Mappings 430 are used by Application Service 141 to tell Implementation Service 131 which Application Callback 500 to execute for a given user response to this aSMS message. There are different ways of registering callbacks based on the response text, including having one callback for all responses to a given message or having a separate callback for each of an enumerated set of responses to a given message, with a catch-all callback for responses not in the enumerated set. Response - Callback Mappings 430 may be represented in many different ways. For example, they may include explicit listings of possible user responses and callback functions or they may be parsed/extracted from content in various formats. For example, if HTTP/HTML is used to connect Implementation Service 131 and Application Service 141 then Response - Callback Mappings 430 may be extracted from the HTML delivered by Application Service 141. This may be done by looking at the possible actions that a text browser would allow on this message.

D. Callback State Information 440 field:

Callback State Information 440 is used to communicate any state information that must be passed back to Application Service 141 when invoking a given Application Callback 500 so Application Service 141 can instantiate the appropriate internal state before executing the Application Callback 500. There are many different ways of representing Callback State Information 440. It may be some token that Implementation Service 131 passes back to Application Service 141 when invoking a callback. For example, if HTTP/HTML is used to connect Implementation Service 131 to Application Service 141, then cookies, rewritten URLs or hidden form fields may be used to represent Callback State Information 440.

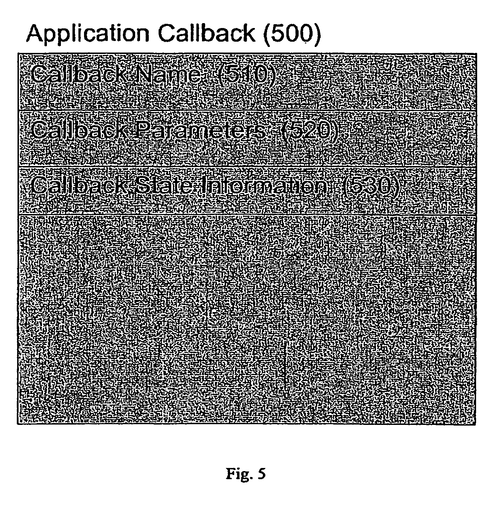

Fig. 5 illustrates the three fields of an Application Callback 500.

A. Callback Name 510 field:

Callback Name 510 is used to identify a specific action/callback on Application Service 141 that must be executed. There are many ways to represent Callback Name 510 based on the protocol used to connect Application Service 141 with Implementation Service 131. It may be an explicit function name to execute or it may be a URL to call. For example, if HTTP/HTML is used to connect Implementation Service 131 with Application Service 141, Callback Names 510 may be represented as URLs.

B. Callback Parameters 520 field:

Callback Parameters 520 are any parameters that Implementation Service 131 must fill in before calling or invoking Application Callback 500. There are many ways to represent Callback Parameters 520 based on the protocol used to connect Application Service 141 to Implementation Service 131. It may be explicit function signatures or some other representation. For example, if HTTP/HTML is used to connect Implementation Service 131 with Application Service 141, Callback Parameters 520 may be represented as form fields that must be filled in before making a HTTP request.

C. Callback State Information 530 field:

Callback State Information 530 is any information that Implementation Service 131 must fill in before calling or invoking Application Callback 500 so the Application Service 141 can instantiate the appropriate internal state. There are many ways to represent Callback State Information 530 based on the protocol used to connect Application Service 141 to Implementation Service 131. It may be some token that Application Service 141 shares with Implementation Service 131 or some other representation. For example, if HTTP/HTML is used to connect Implementation Service 131 with Application Service 141 Callback State Information 520 may be represented as cookies, rewritten URLs or hidden form fields that must be filled in before making a HTTP request.

Implementation Service 131 may be configured with keyword/address-to-application bindings. Users who wish to invoke applications via SMS can send messages containing known "keywords" to a known address associated with Implementation Service 131. This known address may be a short code, a short code with an appended suffix, a cellular telephone number, an email address or an IM address. Implementation Service 131, upon receiving a user message containing one of these configured known keywords or upon receiving a user message to one of these configured known addresses, invokes the proper Application Callback 500 within or to Application Service 141. In order for Implementation Service 131 to invoke the proper Application Callback 500, it stores keyword/address-to-application bindings. While how Implementation Service 131 is configured is implementation dependent, Application Service 141 can configure an Implementation Service 131 by setting up a keyword expression and binding that keyword to an Application Callback 500.

A Keyword Expression evaluates to true if the received user message contains the known keywords. For example, the Keyword Expression <split 1> = "Movies" evaluates to true if the second word in a received user message is "Movies." While this is a simple example, a more complex example may be <split 1> = "Movies | movies | Movie | movie." This expression evaluates to true if the second word in a received user message is either "Movies," "Movie," "movies" or "movie."

Applications Service 141 can send messages to mobile users in one of two ways. First, it can send a message to a mobile user in response to a Mobile Originated Message it receives. For example, a user can initiate an interaction with Application Service 141 by initiating a search for local coffee shops. Alternatively, Application Service 141 can send a message to the mobile user when some "external event" occurs. For example, an Application Service 141 may wish to send a mobile user a message three months after his last oil change.

Regardless of why Application Service 141 wishes to send a mobile terminated message to a mobile user, it always generates an aSMS Message 400 and forwards this message to Implementation Service 131. Implementation Service 131 stores any response-to-callback bindings associated with this aSMS Message 400 and selects a unique reply-to address, from within the Implementation Service's 131 full reply-to address space, for this aSMS Message 400. How Implementation Service 131 selects one of these addresses is implementation dependent. A simple implementation would just allocate a previously unused address that is unique to the user, i.e. Implementation Service 131 does not currently have bindings configured for this address for this user. A more complex implementation could choose to reuse currently allocated addresses as long as the new response-callback bindings do not conflict with the existing response-callback bindings associated with the address. By conflict we mean that interpreting the contents of a reply to a given message would be ambiguous because at least two separate callbacks could match. For example, if an address already has response-callback bindings for the numbers '1', '2' and '3', the Implementation Service 131 cannot use this address to send another message that needs a response-callback binding for '1', '2', or '3' because, for example, when a reply of `1' is received the Implementation Service 131 would not know which callback to invoke. However, this address may be reused if the second message only contains response-callback bindings for 'A', 'B' and `C'. While this example shows conflicts that occur because of exact matches (the response callback bindings were associated with the same string '1') it will be readily appreciated that conflicts could occur because the evaluation of regular expressions or some other function i.e. SOUNDEX results in the same value. It is important to note that Implementation Service 131 desirably uses the same address in different ways for different users. Implementation Service 131 then generates a mobile terminated iSMS Message 300, with the newly selected "reply-to" address, representing the mobile terminated aSMS message, and forwards this message to the intended user's CNI Service 121. CNI Service 121 in turn generates a mobile terminated SMS Message 200, by modifying/translating, if necessary, the contents of the received mobile terminated iSMS message 300. CNI Service 121 then forwards the newly created mobile terminated SMS Message 200 to the mobile user's SMS Client 111.

When a user chooses to reply to a received SMS Message 200 he selects the reply option on his SMS Client 111. SMS Client 111, in response, displays a reply message composition screen with the To Field 210 of this new mobile originated SMS Message 200 populated with data from the From Field 220 of the mobile terminated SMS Message 200 the user is responding to. The user fills in the Message Field 230 of this new mobile originated SMS Message 200 using this reply message composition screen and selects the send option on SMS Client 111. SMS Client 111 then forwards this new mobile originated SMS Message 200 to the user's cellular network's CNI Service 121. CNI Service 121 converts the new mobile originated SMS Message 200 to a new mobile originated iSMS Message 300 and forwards it to the appropriate Implementation Service 131 based on To Field 310 of the new mobile originated iSMS Message 300. The conversion process produces new mobile originated iSMS Message 300 appropriate for the transport and communications protocols connecting CNI Service 121 and Implementation Service 131. Implementation Service 131 receives iSMS Message 300 from CNI Service 121 and based on its To Field 310, From Field 320 and the Message Field 330 identifies the appropriate Application Service 141 and the appropriate Application Callback 500 to invoke. Implementation Service 131 then fills in the appropriate Callback Name, Callback Parameters and Callback State Information and invokes the identified Application Callback 500. In response Application Service 141 invokes the appropriate internal state and executes the appropriate application logic. If, in response, Application Service 141 wishes to send a Mobile Terminated aSMS Message 400, it generates such Message 400 and forwards it to Implementation Service 131. The process then repeats.

Two interaction diagrams that detail how the present invention is used in "user-initiated" and "application-initiated" scenarios are described below.

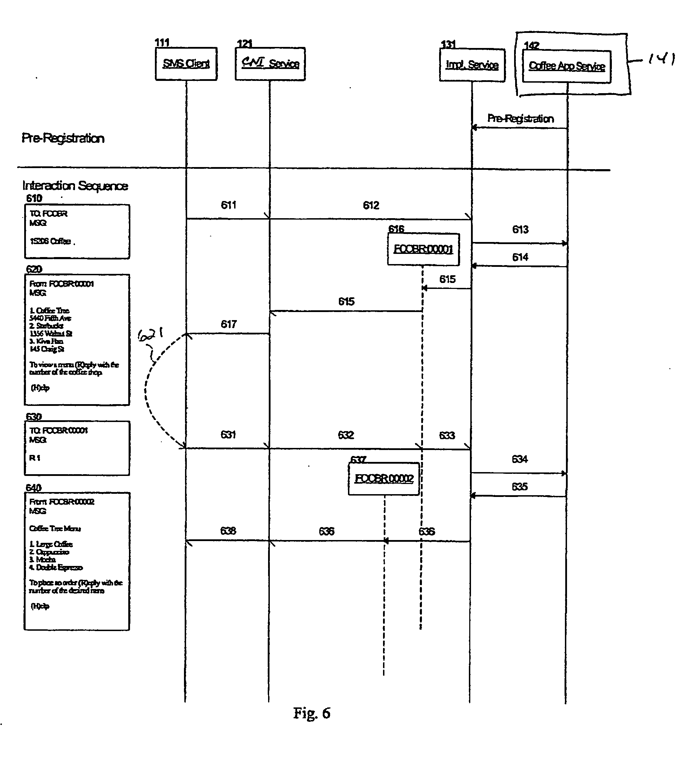

With reference to Fig. 6, a "user-initiated" interaction sequence is shown. Before interactions start, various Application Services 141 register with the Implementation Service 131. While only one Application Service 141 is illustrated in Fig. 1, it is envisioned that a plurality of Application Services may be provided and connected to Implementation Service 131. In this example, three Application Services 141 register with the Implementation Service 131 associated with the short code FOOBR. They do this by configuring the Implementation Service 131 with keyword bindings that can be used to initiate applications. For the sake of this discussion, the following illustrative bindings are presented:

**TABLE 1**

| Reply-to Address | User | Reply | Method | Callback |
|---|---|---|---|---|
| FOOBR | * | <split 1> = | Post | URL: http://wvvw.coffee.com/start.jsp |
| | | Coffee | | POST Param 1: user = <USER_IDENTIFIER> |
| | | | | POST Param 2: zip = <split 0> |
| | | | | |
| FOOBR | * | <split 1> = | Post | URL: http://www.movies.com/start.jsp |
| | | Movies | | POST Param 1: user = <USER_IDENTIFIER> |
| | | | | POST Param 2: zip = <split 0> |
| | | | | |
| FOOBR | * | <split 1 > = | Post | URL: http://www.food.com/start.jsp |
| | | Food | | POST Param 1: user = <USER_IDENTIFIER> |
| | | | | POST Param 2: zip = <split 0> |
| | | | | |

However, the format or content of this table is not to be construed as limiting the invention.

These bindings tell Implementation Service 131 which callback to execute in response to received mobile originated Messages. The Coffee Application's bindings are shown in the first row of Table 1. The information contained in this row tells Implementation Service 131 what to do when it receives a mobile originated message to the address FOOBR, where the second word of the received message is (`<split 1> = Coffee') Coffee. Specifically, it tells Implementation Service 131 to perform a post operation on the URL http://www.coffee.com/start.jsp. Furthermore, in performing this post operation, the Implementation Service 131 should fill in the parameters user and zip.

In addition to Application Services 141 registering with Implementation Service 131, the reply-to-address space of Implementation Service 131 must be configured with CNI Service 121. In this example it is assumed that the cellular networks connecting SMS Clients 111 to CNI Service 121 support short codes with five digit suffixes and the reply-to-address space for the Implementation Service 131 is the set of addresses {FOOBR:00000 - FOOBR:99999}. This means that CNI Service 121 will forward all mobile originated SMS Messages 200 where the To Field is any address in the set {FOOBR:00000 - FOOBR:99999} to Implementation Service 131. Further, Implementation Service 131 selects appropriate addresses form this reply-to-address space to implement session management over SMS as explained herein.

Referring to Fig. 6, once the system has been thus configured, the sequence of events that occurs when a user sends a message containing "<zip> COFFEE" to the address FOOBR is as follows:

Step 610: User Initiates Transaction: A mobile user initiates a transaction by using his SMS Client 111 to send the following mobile originated message SMS 200 to a known address with a known keyword and zip code. He may be made aware of this address and keyword via a number of different mechanisms - for example, a sign at a location or advertising and so forth. Assuming that the known address is FOOBR, the known keyword is "Coffee", and the zip code is to be associated with "15206", below is shown how a user initiates the interaction:
To: FOOBR
MSG: 15206 Coffee

Step 611: SMS Message Transmission: The SMS mobile originated message 200 of step 610 is forwarded to the user's cellular network's CNI Service 121, along with the user's cellular telephone number, which populates the "From Field" 220 of the SMS Message 200, when the user presses the "Send" key on SMS Client 111.

Step 612: CNI Service Processing: In response to receiving the mobile originated SMS Message 200 transmitted in step 611, CNI Service 121 creates the appropriate mobile originated iSMS Message 300 and forwards it to Implementation Service 131 based on the To Field 310 of the thus generated mobile originated iSMS Message 300. Because no address translation is necessary, CNI Service 121 forwards the thus generated mobile originated iSMS Message 300 to the Implementation Service 131 previously associated with the address FOOBR.

It is envisioned that more than one Implementation Service 131 may be connected to CNI Service 121 and that each said Implementation Service 131 may have more than one Application Service 141 connected thereto. Accordingly, the illustration in Fig. 1 of only one Implementation Service 121 connected to CNI Service 121 and one Application Service 141 connected to Implementation Service 131, is, therefore, not to be construed as limiting the invention.

Step 613: Implementation Service Processing Inbound: Implementation Service 131 receives the incoming mobile originated iSMS message 300 and based on the To Field, the From Field and the Message Content of the received iSMS message 300 identifies the appropriate Application Callback 500 to invoke. Recall that these Callbacks were previously configured in the registration phase as shown above in Table 1. For the present example, the identified Application Callback 500 information is:
URL: http://www.coffee.com/start.jsp
POST Param 1: user = <USER_IDENTIFIER>
POST Param 2: zip = <split 0>

Implementation Service 131 now identifies the values of the various needed parameters. For the present example, it inserts the cellular telephone number or some obfuscated user identified associated with cellular telephone number of the user in the USER_IDENTIFIER field of the Application Callback 500 for use by the application. Implementation Service 131 also extracts the first word or string in the received SMS message, i.e., 15206, and associates this word or string with the zip parameter.

Implementation Service 131 now performs an HTTP POST or GET to Application Service 141 to initiate the appropriate Application Callback 500. For the present example, the Implementation Service 131 will perform an HTTP POST operation on the URL http://www.coffee.com/start.jsp. The parameters passed to Application Service 141 as a part of this POST operation will be user (set to USER_IDENTIFIER, in this example the user's cellular telephone number, e.g., 412-555-5394) and zip (set to the first word or string in the received user message text). Finally, Implementation Service 131 inserts any cookies that may be needed. In this case there are no cookies to insert. The POST operation may look like:
POST /start.jsp HTTP/1.1
Host: www.coffee.com
User-Agent: SMaSh text browser/5.0
Accept: text/xml
Accept-Language: en-us;q=0.50
Accept-Encoding: gzip, deflate, compress;q=0.9
Accept-Charset: ISO-8859-1, utf-8;q=0.66, *;q=0.66
Keep-Alive: 200Connection: keep-alive
Content-Type: application/x-www-form-urlencoded
Content-Length: 25
user=4125555394
zip=15206

However, the format or content of this POST is not to be construed as limiting the invention.

Step 614: Application Service Processing: A Coffee Application Service 142 hosted by Application Service 141, in response to the above HTTP Post operation initiated by Implementation Service 131, instantiates the appropriate internal state and executes the appropriate application logic. In this example, Coffee Application Service 142 creates a new web application session for the user associated with "USER_IDENTIFIER" with the appropriate internal state and executes the application logic contained in the web page start.jsp. Executing start.jsp causes a mobile terminated aSMS message 400 to be generated. In this example, the execution of the start.jsp page is synchronous, so it is not necessary for Coffee Application Service 142 to pass back data regarding the Intended Recipient 410. Below is shown is an example of what this mobile terminated aSMS message 400 may look like.
HTTP/1.1 200 OK
DATE: Wed, 1 Jun 2005 00:00:00 GMT
Cache-Control: max-age=31536000, must-revalidate
Set-Cookie: sessionid=987654321; expires=Fri, 01 Jun 2007 10:00:00 GMT; path=/; domain=www.coffee.com
Connection: close
Content-type: text/html
<html>
<head><title>Coffee search main page</title></head>
<body>
<form action="http://www.coffee.com/storeselect.jsp" name="store" method="post" id="store_select">
<select name="store" id="store_select">
<option value="1">Coffee Tree<br />5440 Fifth Ave.</option>
<option value="2">Starbucks<br />1356 Walnut Street</option>
<option value="3">Kiva Han<br />145 Craig Street</option>
</select>
<label for="store_select">To view a menu (R)eply with the number of the coffee shop.</label>
</form>
<br/>
<a href=http://www.coffee.com/help/Help_Store_Select.html>(H)elp</a>
</body>
</html>

However, the format or content of this message is not to be construed as limiting the invention.

Step 615: Implementation Service Processing Outbound: Implementation Service 131 receives the mobile terminated aSMS Message 400 from Coffee Application Service 142 including the HTTP reply in response to executing the Application Callback 500 in step 613. Implementation Service 131 then creates a mobile terminated iSMS Message(s) 300 for delivery to the intended recipient's CNI Service 121 and generates and stores any necessary response - callback bindings. As a part of this process, Implementation Service 131 selects the new "Reply-to" address FOOBR:00001 616 from Implementation Service's 131 full reply-to address space. Implementation Service's 131 reply-to address space is the set of addresses {FOOBR:00000 - FOOBR:99999} that it previously configured with the CNI Service 121. How Implementation Service 131 selects one of these addresses is implementation dependent. A simple implementation would just allocate a previously unused address that is unique to the user, i.e. Implementation Service 131 does not currently have bindings configured for this address for this user. A more complex implementation could choose to reuse currently allocated addresses as long as the new response-callback bindings do not conflict with the existing response-callback bindings associated with the address. In this example we assume a simple implementation that will allocate currently unused addresses. Specifically, the system will simply increment the suffix. So it could start with FOOBR:00000 and then goto FOOBR:00001 and so forth. Once it gets to FOOBR:99999 it can begin to reuse addresses from FOOBR:00000 again. This new address is represented as object 616 in Fig. 6 in order to show its lifespan. Once Implementation Service 131 has created the appropriate mobile terminated iSMS Message(s) 300, it identifies the appropriate CNI Service 121 for the mobile user, i.e. the CNI Service 121 that services the cellular network for the user. It then forwards the generated mobile terminated iSMS message(s) to it. Below is shown what this message may look like for the current example:
To: 4125555394
From: FOOBR:00001
Message:

1. Coffee Tree
5440 Fifth Ave.
2. Starbucks
1356 Walnut Street
3. Kiva Han
145 Craig Street

To view a menu (R)eply with the
number of the coffee shop.

(H)elp

However, the specific format or content of this message is not to be construed as limiting the invention.

Table 2 below shows what the response-callback bindings generated by Implementation Service 131 in response to receiving the message of step 614 may look like for the present example.

**TABLE 2**

| Reply-to Address | User | Reply | Method | Callback |
|---|---|---|---|---|
| FOOBR:00 | 41255553 | <split 0> = | POST | URL: http://www.coffee.com/storeselect.jsp |
| 001 | 94 | R | | Cookie: sessionid = 987654321 |
| | | | | POST Param 1: store = <split 1> |
| FOOBR:00 | 41255553 | <split 0> = | GET | URL: |
| 001 | 94 | H | | http://www.coffee.com/help/Help_Store_Select.ht ml |
| | | | | Cookie: sessionid = 987654321 |

However, the format or content of this table is not to be construed as limiting the invention.

Step 617: CNI Service Processing Outbound: CNI Service 121 transforms the received mobile terminated iSMS Message(s) 300 into a mobile terminated SMS Message(s) 200 that can be delivered to mobile clients. This typically involves converting the iSMS Message's To Field and From Field into "valid" SMS addresses. In this example, however, because the iSMS Message's To Field is a mobile phone number and the From Field is a short code with an appended suffix no transformation is needed. Once the transformation (if required) is complete, CNI Service 121 locates the mobile device within the cellular network and transmits the newly created mobile terminated SMS Message(s) 200 to the appropriate SMS Client 111.

Step 620: SMS Client User View: SMS Client 111 now displays the received mobile terminated SMS Message. The From Field 230 of this message is the one generated by CNI Service 121 in step 617. Below, is shown what the received message may look like for the current example.
From: FOOBR:00001
MSG:
   1. Coffee Tree
      5440 Fi fth Ave.
   2. Starbucks
      1356 Walnut Street
   3. Kiva Han
      145 Craig Street

To view a menu (R)eply with the
number of the coffee shop.

(H)elp

However, the specific format or content of this message is not to be construed as limiting the invention.

Step 621: SMS Client User Response: The user replies to the mobile terminated SMS message 200 of step 620 by sending a new mobile originated SMS message 200 in step 630. While viewing the mobile terminated SMS message 200 of step 620, the user selects the reply option on his SMS Client 111. SMS Client 111 displays a new SMS Message composition screen. Furthermore, SMS Client 111 automatically populates the "To Field" 210 of this new message with the From Field 220 of the mobile terminated message 200 in step 620. For the current example, the message composition screen when the user selects the reply option may look like:
To: FOOBR:00001
MSG:

However, the specific format and content of this message composition screen is not to be construed as limiting the invention.

The user then enters the text "R1", for example, into Message Field 230 of the SMS Message of step 630:
To: FOOBR:00001
MSG: R 1

Step 631: SMS Message Transmission: The mobile originated SMS message 200 of step 630 including the user entered text is then forwarded to the user's cellular network's CNI Service 121 when the user presses "Send."

Step 632: CNI Service Processing: CNI Service 121 creates the appropriate mobile originated iSMS Message 300 and forwards this mobile originated iSMS message 300 to the appropriate Implementation Service 131 based on the To Field 310 of this mobile originated iSMS Message 300. In this example, the received mobile originated SMS Message 200 is converted to the appropriate mobile originated iSMS Message 300 and forwarded to the Implementation Service 131 previously associated with the address prefix FOOBR. No address translation is necessary.

Step 633: Address Processing Inbound: The address object simply passes the mobile originated iSMS message 300 through to Implementation Service 131.

Step 634: Implementation Service Processing Inbound: Based on the incoming mobile originated iSMS Message 300, Implementation Service 131 identifies and executes the appropriate Application Callback 500 on the appropriate Application Service 141. Recall that Implementation Service 131 was configured in step 615 with the Application Callbacks shown in Table 2 for user responses to message 620. Upon receiving the user message including the reply-to address FOOBR:00001. Implementation Service 131 identifies the appropriate callback information (Table 2). For the present example the callback information is:
URL: http://www.coffee.com/storeselect.jsp
Cookie: sessionid = 987654321
POST Param 1: store = <split 1>

Implementation Service 131 then parses the received mobile originated iSMS message 300 and identifies the values of the various needed parameters. For the present example, it parses the received user message text in order to extract the store identifier, which is the second word in the message. For the present example, this will be "1." Implementation Service 131 now having identified the appropriate Application Callback 500, callback parameters and callback state information now performs the appropriate HTTP POST or GET operation. For the present example, Implementation Service 131 performs a HTTP POST operation on the URL http://www.coffee.com/storeselect.jsp. The parameter passed to Coffee Application Service 142 as a part of this POST operation will be the store identifier "1". Finally, Implementation Service 131 inserts any cookies that may be needed. In this case it will insert the cookie "sessionid" set to "987654321." The POST operation may look like:
POST /storeselect.jsp HTTP/1.1
Host: www.coffee.com
User-Agent: Mozilla/5.0 (Windows; U; Windows NT 5.1; en-US; rv:1.2)
Gecko/20021126
Accept: text/xml
Accept-Language: en-us;q=0.50
Accept-Encoding: gzip, deflate, compress;q=0.9
Accept-Charset: ISO-8859-1, utf-8;q=0.66, *;q=0.66
Keep-Alive: 200Connection: keep-alive
Content-Type: application/x-www-form-urlencoded
Cookie: sessionid=987654321;
Content-Length: 7
store=1

However, the specific format and content of this POST is not to be construed as limiting the invention.

Step 635: Coffee Application Service Processing: Coffee Application Service 142, in response to the foregoing HTTP request initiated by Implementation Service 131, instantiates the appropriate state and executes the appropriate application logic associated with Application Callback 500. In this example, Coffee Application Service 142 re-instantiates the state associated with its sessionid 987654321 and now, with the appropriate internal state, executes the application logic contained in storeselect.jsp. Executing storeselect.jsp generates a new aSMS Message 400. Below we show what this message may look like.
HTTP/1.1200 OK
DATE: Wed, 1 Jun 2005 00:00:00 GMT
Cache-Control: max-age=31536000, must-revalidate
Connection: close
Content-type: text/html
<html>
<head><title>Coffee search main page</title></head>
<body>
<form action="http://www.coffee.com/itemselect.jsp" name="item" method="post" id="item_select">
Coffee Tree Menu <br/>
<input type="hidden" name="store" value="CT54" />
<select name="item" id="item_select">
<option value="1">Large Coffee</option>
<option value="2">Cappuccino</option>
<option value="3">Mocha</option>
<option value="4">Double Espresso</option>
</select>
<label for="item_select">To place an order (R)eply with the number of the desired item. </label>
</form>
<a href=http://www.coffee.com/help/Help_Order.html>(H)elp</a>
</body>
</html>

However, the specific format and content of this message is not to be construed as limiting the invention.

Step 636: Implementation Service Processing Outbound: Implementation Service 131 receives the SMS Message 400 in response to execution of the HTTP Post operation in step 634. It then creates corresponding mobile terminated iSMS Message(s) 300 for delivery to the intended recipient's CNI Service 121 and generates and stores any necessary response - callback bindings shown in Table 3 below. As a part of this process, Implementation Service 131 selects a new "Reply-to" address FOOBR:00002 637 from a user's and Implementation Service's 131 full reply to address space. Implementation Service's 131 reply-to address space is the set of unallocated addresses {FOOBR:00000 - FOOBR:99999} that it previously configured with CNI Service 121. How Implementation Service 131 selects one of these addresses is implementation dependent. A simple implementation would just allocate a previously unused address that is unique to the user, i.e. Implementation Service 131 does not currently have bindings configured for this address for this user. A more complex implementation could choose to reuse currently allocated addresses as long as the new response-callback bindings do not conflict with the existing response-callback bindings associated with the address. In this example we assume a simple implementation that will allocate currently unused addresses. Specifically, the system will simply increment the suffix. So it could start with FOOBR:00000 and then goto FOOBR:00001 and so forth. Once it gets to FOOBR:99999 it can begin to reuse addresses from FOOBR:00000 again. This new address is represented as an object in Fig. 6 in order to show its lifespan.

Once Implementation Service 131 has created the appropriate mobile terminated iSMS Message(s) 300, it identifies the appropriate CNI Service 121 for the mobile user, i.e. the CNI Service 121 that services the cellular network for the user. It then forwards the thus generated mobile terminated iSMS message(s) 300 to it. Below is shown what this message may look like for the current example:
To: 4125555394
From: FOOBR:00002
Message:

Coffee Tree Menu
   1. Large Coffee
   2. Cappuccino
   3. Mocha
   4. Double Espresso

To place an order (R)eply with the
number of the desired item.

(H)elp

However, the specific format and content of this message is not to be construed as limiting the invention.

Table 3 below shows what response-callback bindings generated by Implementation Service 131 may look like for the present example.

**TABLE 3**

| Reply-to Address | User | Reply | Method | Callback |
|---|---|---|---|---|
| FOOBR:0 | 4125555 | <split 0> = | POST | URI: http://www.coffee.com/itemselect.jsp |
| 0002 | 394 | R | | Cookie: sessionid = 987654321 |
| | | | | POST Param 1: store = CT54 |
| | | | | POST Param 2: item = <split 1> |
| FOOBR:0 | 4125555 | <split 0> = | GET | URI: |
| 0002 | 394 | H | | http://www.coffee.com/help/Help_Order_Coffee .html |
| | | | | Cookie: sessionid = 987654321 |

However, the format or content of this table is not to be construed as limiting the invention.

Step 638: CNI Service Processing Outbound: CNI Service 121 transforms the received mobile terminated iSMS Message(s) 300 into mobile terminated SMS Message(s) 200 that can be delivered to mobile clients. This typically involves converting each mobile terminated iSMS Message's To Field and From Field into "valid" SMS addresses. In this example, however, because the iSMS Message's To Field is a mobile phone number and the From Field is a short code with an appended suffix, i.e., reply-to-address FOOBR:00002, no transformation is needed. Once the transformation (if required) is complete, CNI Service 121 locates the user's mobile device within the cellular network and transmits each newly created mobile terminated SMS Message 200 to the user's SMS Client 111.

Step 640: SMS Client User View: The user's SMS Client 111 now displays the mobile terminated SMS Message 200 transmitted in step 638. The From Field 220 for this message is populated with the reply-to-address FOOBR:00002 generated by Implementation Service 131 in step 636. Below, is shown what the received message may look like for the current example.
From: FOOBR:00002
Message:

Coffee Tree Menu
   1. Large Coffee
   2. Cappuccino
   3. Mocha
   4. Double Espresso

To place an order (R)eply with the
number of the desired item.

(H)elp

Replies to this message are handled via the same method discussed above in connection with Fig. 6 starting at step 621 utilizing the response-callback bindings shown in Table 3 and the new reply-to-address FOOBR:00002 in replacement of the callback bindings shown in Table 2 and the reply-to-address FOOBR:00001.

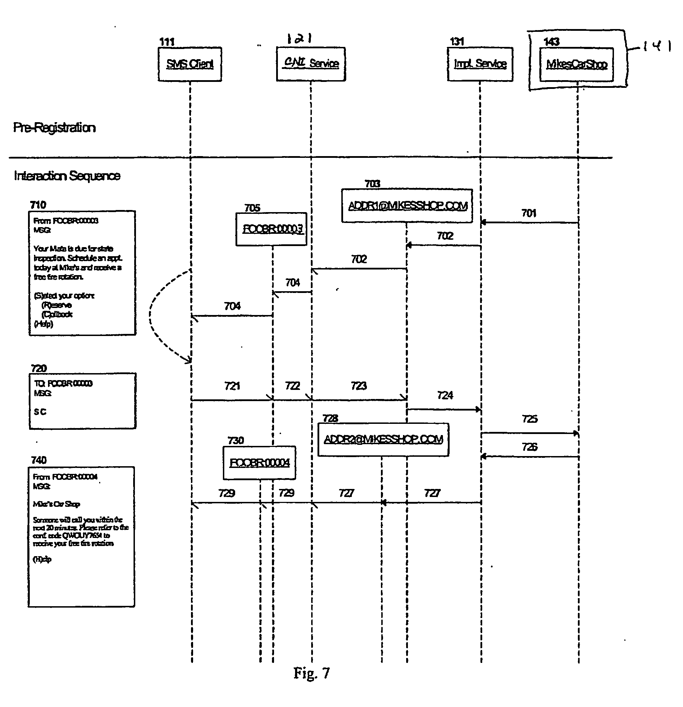

With reference to Fig. 7 an "application initiated" interaction sequence will now be described. This sequence is described using, for illustration purposes, a sample application that wishes to remind a user that his car needs to be inspected. For this example no registration process is needed. However, if Mike's Car Shop Application Service 143 hosted by application service 141 had usage scenarios that could be initiated by users sending mobile originated SMS Messages 200, a registration process would be necessary. While the previous example assumed that the HTTP/HTML protocol was used for communications between Implementation Service 131 and Coffee Application Service 142, this example assumes that a XML based protocol is used for communications between Implementation Service 131 and Mike's Car Shop Application Service 143. This XML protocol is provided strictly as an example for explanation purposes. It will be appreciated that other suitable and/or desirable communications protocols that presently exist or which may be developed are still within the scope and spirit of the present embodiment.

In this example, assume that CNI Service 121 and Implementation Service 131 communicate with each other using email. As a result CNI Service 121 does not need to be configured with the reply-to-address for Implementation Service 131. Further, the reply-to-address space of the Implementation Service 131 is the set of email addresses that it monitors for incoming messages. In this example, we assume that the reply-to-address space for Implementation Service 131 is ADDR*@MIKESSHOP.COM, i.e. all email addresses in the domain MIKESSHOP.COM that begin with ADDR. This means that all emails to an address in the set of addresses ADDR*@MIKESSHOP.COM will be forwarded to Implementation Service 131. Implementation Service 131 selects appropriate addresses from this reply-to-address space to implement session management over SMS as explained herein.

With reference to Fig. 7 an "application initiated" interaction sequence follows:

Step 701: Mike's Car Shop Application Processing: The Mike's Car Shop Application Service 143, in response to some external trigger (for example a timer), wishes to send a message to a mobile user. As a result, it generates an aSMS Message 400. This message may look like:
<SMSMessage>
<To telephoneNumber='4125555394'/>
<Expiration time = '9:00 PM July 28 2005' />
<Text>Your Miata is due for State Inspection. Schedule an appt.
today at Mike's and receive a free tire rotation.
(S)elect your option:
(R)eserve
(C)allback
(H)elp
</Text>
<Responses>
<Response replyTxt='S R' method='StartMikesReservationSystem("4125555394")' />
<Response replyTxt='S C' method='HaveMikesCallCustomerBack("4125555394")' />
<Response replyTxt='H' method='HelpMikesCustomer("4125555394")' />
<Response replyTxt='*' method='HelpMikesCustomer("41265555394")' />
<Responses/>
</SMSMessage>

However, the specific format and content of this message is not to be construed as limiting the invention.

In this example, the "To" tag in the XML is used to indicate the Intended Recipient 410 of the aSMS Message 400. Because Mike's Car Shop Application Service 143 initiates this transaction, it never receives a USER_IDENTIFIER from Implementation Service 121 as in the previous interaction sequence. As a result, Mike's Car Shop Application Service 143 must supply a unique user identifier associated with the "To" tag to Implementation Service 131. This unique user identifier may be the cellular telephone number of the intended recipient. Alternatively, it may be some obfuscated identifier that is known to both the Implementation Service 131 and the Mike's Car Shop Application Service 143 that uniquely identifies a particular mobile user or a group of mobile users. If an obfuscated user identifier is used, Implementation Service 131 must know how to find the mobile user's cellular telephone number based on this identifier.

Step 702: Implementation Service Processing Outbound: Implementation Service 131 receives the aSMS Message 400 and creates a mobile terminated iSMS Message(s) 300 for delivery to the intended recipient and generates and stores any necessary response - callback bindings shown in Table 4 below.

As a part of this process Implementation Service 131 selects a new "Reply-to" address ADDR1@MIKESSHOP.COM 703 from a user's and Implementation Service's 131 full reply to address space. Implementation Service's 131 reply-to address space is the set of unallocated addresses ADDR*@MIKESSHOP.COM. How Implementation Service 131 selects one of these addresses is implementation dependent. A simple implementation would just allocate a previously unused address that is unique to the user, i.e. Implementation Service 131 does not currently have bindings configured for this address for this user. A more complex implementation could choose to reuse currently allocated addresses as long as the new response-callback bindings do not conflict with the existing response-callback bindings associated with the address. In this example we assume a simple implementation that will allocate currently unused addresses. Specifically, the system will simply increment the address. So it can start with ADDR1@MIKESSHOP.COM and goto ADDR2@MIKESSHOP.COM and so forth. Implementation Service 131 may choose to reuse addresses after some threshold is reached. For example, after ADDR99999@MIKESSHOP.com, Implementation Service 131 may begin to reuse addresses starting at ADDR1@MIKESSHOP.com. This new address is represented as an object in Fig. 7 in order to show its lifespan. Once Implementation Service 131 has created the appropriate mobile terminated iSMS Message(s) 300, it identifies the appropriate CNI Service 121 for the mobile user, i.e. the CNI Service 121 that services the cellular network for the user. It then forwards the generated mobile terminated iSMS Message(s) 300 to it. Below is shown what this message may look like for the current example:
To: 4125555394
From: ADDR1@MIKESSHOP.COM
Message:

Your Miata is due for state
inspection. Schedule an appt.
today at Mike's and receive a
free tire rotation.
(S)elect your option:
   (R)eserve
   (C)allback
(H)elp

However, the specific format and content of this message is not to be construed as limiting the invention.

The response - callback bindings generated and stored by Implementation Service 131 may look like this:

**TABLE 4**

| Reply-to Address | User | Reply | Method | Callback |
|---|---|---|---|---|
| ADDR1@ MIKESSH | 412555 5394 | <response> = "S R" | Method Call | StartMikesReservationSystem(Strin g user) |
| OP.COM | | | | user = "4125555394" |
| ADDR1@ MIKESSH | 412555 5394 | <response> = "S C" | Method Call | HaveMikesCallCustomerBack(Strin g user) |
| OP.COM | | | | user = "4125555394" |
| ADDR1@ MIKESSH | 412555 5394 | <response> = "H" | Method Call | HelpMikesCustomer(String user) |
| OP.COM | | | | user = "4125555394" |
| ADDR1@ MIKESSH | 412555 5394 | <response> = "*" | Method Call | HelpMikesCustomer(String user) |
| OP.COM | | | | user = "4125555394" |

However, the format or content of this table is not to be construed as limiting the invention.

Step 704: CNI Service Processing Outbound: CNI Service 121 transforms the received mobile terminated iSMS Message(s) 300 into a mobile terminated SMS Message(s) 200 that can be delivered to mobile clients. This typically involves converting the mobile terminated iSMS Messages' To and From Fields into "valid" SMS addresses. In this example, CNI Service 121 assigns the email address ADDR1@MIKESSHOP.COM in step 703 the following short code with appended suffix: FOOBR:00003 in step 705. This new address is represented as an object in Fig. 7 in order to show its lifespan. In this example, no transformation is needed for the To Field as it is already a valid mobile phone number. Once the transformation (if required) is complete, CNI Service 121 locates the mobile device within the cellular network and transmits the newly created mobile terminated SMS Message 200 to the mobile device.

Step 710: User Receives Message: The user's SMS Client 111 now displays the received mobile terminated SMS Message 200. The From Field 220 for this message is the one (FOOBR:00003) generated by CNI Service 121 in step 704. Below is shown what the received message may look like for the current example.
From: FOOBR:00003
Message:

Your Miata is due for state
inspection. Schedule an appt.
today at Mike's and receive a
free tire rotation.
(S)elect your option:
   (R)eserve
   (C)allback
(H)elp

However, the specific format and content of this message is not to be construed as limiting the invention.

Step 721: User replies to Received Message: The user replies to this mobile terminated SMS message 200 by selecting the reply option on his SMS Client 111. The SMS Client 111 also displays a new SMS Message composition screen in step 720 and automatically populates the To Field 210 of the new message with the From Field 220 of message 710 the user was viewing. When the user selects the reply (R) option while viewing message 720, the SMS message composition screen shows:
To: FOOBR:00003
Message:

Step 721: User Response: The user responds with "S C":
To: FOOBR:00003
Message: S C

However, the specific format and content of this message and reply are not to be construed as limiting the invention.

Step 722: SMSC Address Processing Inbound: As previously explained, the address object simply passes the message of step 721 through to CNI Service 121 for processing.

Step 723: SMSC Processing Inbound: CNI Service 121 forwards the mobile originated SMS message 200 of step 721 to the appropriate location based on the To Field of the message. In this example, the To Field is FOOBR:00003. CNI Service 121 knows that for this user, FOORB:00003 is associated with the email address ADDR1@MIKESSHOP.COM. So the mobile originated SMS Message 200 of step 721 is converted to a new mobile originated iSMS Message 300 and forwarded to the email address ADDR1@MIKESSHOP.COM, which is monitored by Implementation Service 131.

Step 724: Address Processing Inbound: As previously explained, the address object simply passes the new mobile originated iSMS message 300 through to Implementation Service 131 for processing.

Step 725: Implementation Service Processing Inbound: Recall that Implementation Service 131 was configured in step 702 with Application Callbacks 500 for user responses to Message 710 (Table 4). Upon receiving the new mobile originated iSMS message 300, Implementation Service 131 identifies the appropriate callback information. For the present example, the callback information is:
HaveMikesCallCustomerBack(String user)
User = "4125555394"

Implementation Service 131 then invokes the following application callback 500 to Mike's Car Shop Application Service 143:
HaveMikesCallCustomerBack("4125555394").

Step 726: Mike's Car Shop Application Processing: Mike's Car Shop Application Service 143, in response to Implementation Service's 131 application callback 500, instantiates the appropriate state and executes the appropriate application logic associated with the application callback 500. In this example, Mike's Car Shop Application Service 143 executes the method HaveMikesCallCustomerBack("4125555394").

Mike's Car Shop Application Service 143, in response to the received application callback 500 of step 725, generates a new aSMS Message 400. The message may look like this:
<SMSMessage>
<To telephoneNumber='4125555394'/>
<Expiration time = '9:00PM, July 28 2005'/>
<Text>Mike's Car Shop
Someone will call you within
the next 20 minutes.
Please refer to the conf.
code QWOUY7654 to receive
your free tire rotation.
(H)elp
</Text>
<Responses>
<Response replyTxt='H' method='HelpMikesCustomer("4125555394")'/>
<Response replyTxt='*' method='HelpMikesCustomer("4125555394")'/>
<Responses/>
</SMSMessage>

However, the specific format and content of this message is not to be construed as limiting the invention.

Step 727: Implementation Service Processing Outbound: Implementation Service 131 receives the new aSMS Message 400 and creates therefrom a mobile terminated iSMS Message(s) 300 for delivery to the intended recipient and generates and stores any necessary response - callback bindings shown in Table 5 below.

As a part of this process, Implementation Service 131 selects a new "Reply-to" address ADDR2@MIKESSHOP.COM in step 728 from a user's and Implementation Service's 131 full reply to address space. Implementation Service's 131 reply-to address space is the set of addresses ADDR*@MIKESSHOP.COM. How Implementation Service 131 selects one of these addresses is implementation dependent. A simple implementation would just allocate a previously unused address that is unique to the user, i.e. Implementation Service 131 does not currently have bindings configured for this address for this user. A more complex implementation could choose to reuse currently allocated addresses as long as the new response-callback bindings do not conflict with the existing response-callback bindings associated with the address. In this example we assume a simple implementation that will allocate currently unused addresses. Specifically, the system will simply increment the address. So it can start with ADDR1@MIKESSHOP.COM and goto ADDR2@MIKESSHOP.COM and so forth. The implementation may choose to reuse addresses after some threshold is reached. For example, after ADDR99999@MIKESSHOP.com the implementation may begin to reuse addresses starting at ADDR1@MIKESSHOP.com. This new address is represented as an object in Fig. 7 in order to show its lifespan.

Once Implementation Service 131 has created the appropriate mobile terminated iSMS Message 300, it identifies the appropriate CNI Service 121 for the mobile user, i.e. the CNI Service 121 that services the cellular network of the user. It then forwards the generated mobile terminated iSMS Message 300 to it. Below is shown what this message may look like for the current example:
To: 4125555394
From: ADDR2@MIKESSHOP.COM
Message: Mike's Car Shop

Someone will call you within the
next 20 minutes. Please refer to the
conf. code QWOUY7654 to
receive your free tire rotation.

(H)elp

However, the specific format and content of this message is not to be construed as limiting the invention.

The response - callback bindings generated and stored by Implementation Service 131 may look like this:

**TABLE 5**

| Reply-to Address | User | Reply | Method | Callback |
|---|---|---|---|---|
| ADDR2@ MIKESSH | 41255553 94 | <response> = "H" | Method Call | HelpMikesCustomer(String user) |
| OP.COM | | | | user = "4125555394" |
| ADDR2@ MIKESSH | 41255553 94 | <response> = "*" | Method Call | HelpMikesCustomer(String user) |
| OP.COM | | | | user ="4125555394" |

However, the format or content of this table is not to be construed as limiting the invention.

Step 729: CNI Service Processing Outbound: CNI Service 121 transforms the received mobile terminated iSMS Message(s) 300 into a terminated SMS Message(s) 200 that can be delivery to mobile clients. This typically involves converting the mobile terminated iSMS Message's 200 To and From Fields into "valid" SMS addresses. In this example, CNI Service 121 assigns the email address ADDR2@MIKESSHOP.COM in step 730 the following short code with appended suffix: FOOBR:00004. This new address is represented as an object in Fig. 7 in order to show its lifespan. However, no transformation is needed for the To Field as it is already a valid mobile phone number. Once the transformation (if required) is complete, CNI Service 121 locates the user's mobile device within the cellular network and transmits the newly created mobile terminated SMS Message 200 to the mobile device.

Step 740: User Receives Message and Replies: The user's SMS Client 111 now displays the received SMS Message. The From Field 220 for this message is populated with FOOBR:00004 generated by tCNI Service 121 in step 729. Below is shown what the received message may look like for the current example.
From: FOOBR:00004
Message:

Mike's Car Shop

Someone will call you within the
next 20 minutes. Please refer to the
conf. code QWOUY7654 to
receive your free tire rotation.

(H)elp

Replies to this message are handled via the same method discussed above in connection with Fig. 7 starting at step 710 utilizing the response-callback bindings shown in Table 5 and the new reply-to-address ADDR2@MIKESSHOP.COM in replacement of the callback bindings shown in Table 4 and the reply-to-address ADDR1@MIKESSHOP.COM.

The present invention has been described with reference to preferred embodiments. Obvious modifications and alterations will occur to others upon reading and understanding the preceding detailed description. For example, while Fig. 1 shows only a single cell phone/mobile device 110, a single CNI Service 121, a single Implementation Service 131 and a single Application Service 141, this is not to be construed as limiting the invention since, as one of ordinary skill in the art would recognize, the present invention is extensible to systems having multiple cell phones/mobile devices 110, multiple CNI Services 121, multiple Implementation Services 131 and multiple Application Services 141. Accordingly, the illustration in Fig. 1 is not to be construed in any manner as limiting the invention. Moreover, it is to be understood that CNI Service 121 encapsulates many different, potentially geographically distributed, components that enable SMS communications within cellular networks and enable communications between SMS clients 111 and Application Service 141. Specifically, CNI Service 121 includes a cellular network's SMSC service. CNI Service 121 also includes email gateways and IM gateways are used in a particular network configuration. CNI Service 121 also includes an SMS Aggregator if used in a particular network configuration. While the present invention has been explained in terms of these three embodiments of CNI Service 121, obvious modifications to these embodiments by those skilled in the art can produce alternative embodiments of CNI Service 121. Thus the presented three embodiments are not to be construed as limiting the invention. It is intended that the invention be construed as including all such modifications and alterations insofar as they come into the scope of the appended claims or the equivalents thereof.

## Claims

1. A method of session based communications for enabling users of a two-way electronic messaging system comprising a client device and a first application service, to simultaneously interact with multiple applications, the method comprising:
(a) storing a set of unallocated reply-to addresses that are freely assignable;
(b) assigning (701 to 703) a first unallocated reply-to address (703) from the set thereof to a first message (200, 710) dispatched from a first application service (141) to a client device (111); and
(c) routing (721 to 725) a reply (200, 720) to the first message utilizing the reply-to address assigned in step (b);
**characterized by**:
(d) following step (b), assigning (726 to 728) a second unallocated reply-to address (728) from the set thereof to a second message (200, 740) dispatched from the first application service to the client device; and
(e) routing, from the client device to the first application service, a reply to the second message utilizing the reply-to address assigned in step (d),
wherein:
step (b) includes storing a first set of response-callback bindings for the first message dispatched from the first application service to the client device;
step (c) includes invoking (721 to 725) a callback to the first application service based on a content (720) of the reply to the first message from the first application service;
step (d) includes storing a second set of response-callback bindings for the second message dispatched from the first application service to the client device, wherein when the first set of response-callback bindings do not have a conflict with the second set of response-callback bindings, the second reply-to-address that is assigned to the second message dispatched from the first application service to the client device is the same as the first reply-to-address, otherwise, the second reply-to-address assigned to the second message dispatched from the first application service to the client device is different than the first reply-to-address; and
step (e) includes invoking a callback to the first application service, based on a content of the reply to the second message from the first application service.

2. The method of claim 1, further including:
(f) assigning a third unallocated reply-to address from the set thereof to a first message dispatched from a second application service to the client device; and
(g) routing a reply to the first message of step (f) from the client device to the second application service utilizing the reply-to address assigned in step (f).

3. The method of claim 2, further including:
(h) following step (f), assigning a fourth unallocated reply-to address from the set thereof to a second message dispatched from the second application service to the client device; and
(i) routing a reply to the second message of step (h) from the client device to the second application service utilizing the reply-to address assigned in step (h).

4. The method of claim 3, further including:
(j) storing a third set of response-callback bindings for the first message dispatched from the second application service to the client device; and
(k) in response to a reply from the client device to the first message dispatched from the second application service, invoking a callback on the second application service based on a content of the reply to the first message dispatched from the second application service.

5. The method of claim 4, further including:
(l) storing a fourth set of response-callback bindings for a third message dispatched from either the first application service or the second application service to the client device;
(m) when the response-callback bindings stored in step (l) and either step (b) or step (j) do not have a conflict, assigning the respective first or third reply-to-address to the third message dispatched to the client device in step (l), otherwise assigning a fourth unallocated reply-to-address from the set unallocated reply-to-addresses to the third message dispatched to the client device in step (l); and
(n) in response to a reply from the client device to the third message, invoking a callback on the first application service or the second application service utilizing the reply-to-address assigned in step (m) and based on a content of the reply to the third message.

6. The method of claim 5, further including:
(o) storing a fifth set of response-callback bindings for a fourth message dispatched from the other of the first application service or the second application service to the client device;
(p) when the response-call back bindings stored in step (o) and either step (b), step (j), or step (l) do not have a conflict, assigning the respective first, third, or fourth reply-to-address to the fourth message dispatched to the client device in step (o), otherwise assigning a fifth unallocated reply-to-address from the set of unallocated reply-to-addresses to the fourth message dispatched to the client in step (o); and
(q) in response to a reply from the client device to the fourth message, invoking a callback on the other of the first application service or the second application service utilizing the reply-to-address assigned in step (p) and based on a content of the reply to the fourth message.

7. The method of claim 1, further including:
(f) storing a third set of response-callback bindings for a third message dispatched from a second application service to the client device;
(g) assigning a third unallocated reply-to address from the set thereof to the third message dispatched from the second application service to the client device;
(h) in response to a reply from the client device to the third message from the second application service, invoking a callback on the second application service utilizing the third reply-to-address and based on a content of the reply to the third message from the second application service;
(i) storing a fourth set of response-callback bindings for a fourth message dispatched from the second application service to the client device;
(j) when the third set of response-callback bindings do not have a conflict with the fourth set of response-callback bindings, assigning the third reply-to-address to the fourth message dispatched from the second application service to the client device, otherwise, assigning a fourth unallocated reply-to address from the set of unallocated reply-to-addresses to the fourth message dispatched from the second application service to the client device; and
(k) in response to a reply from the client device to the fourth message from the second application service, invoking a callback on the second application service utilizing the reply-to-address assigned in step (j) and based on a content of the reply to the fourth message from the second application service.

8. The method of claim 1, wherein:
each dispatched message includes first data regarding the intended recipient of the message, data regarding the application that output the message, and text; and
steps (b) and (d) each include:
constructing from each dispatched message a client terminated message that includes the text, the reply-to-address that was assigned to the dispatched message, and either the first data regarding the intended recipient or second data regarding the intended recipient derived from the first data regarding the intended recipient, but which excludes the data regarding the application that output the message; and
outputting the client terminated message for delivery of the text of the client terminated message to the client device associated with the first or second data regarding the intended recipient, wherein each dispatched message is assigned a unique reply-to-address that maintains a state between the client terminated message and a client originated message in reply to the client terminated message.

9. The method of claim 8, further including:
constructing from each client originated message a second client originated message that includes data in reply to the text and the reply-to-address included in the client terminated message that has the same state as the client originated message; and
outputting each second client originated message for delivery thereof to the first application service based on the reply-to-address included in the second client originated message that has the same state as the second client terminated message.

10. The method of any of the claims above, wherein the reply-to-addresses are one of the following:
email addresses;
short codes;
short codes with an appended suffixes or prefixes;
telephone numbers; or
instant messaging, IM, addresses.

11. The method of claim 2, further including:
(h) storing a third set of response-callback bindings for the first message dispatched from the second application service to the client device; and
(i) in response to a reply from the client device to the first message dispatched from the second application service, invoking a callback on the second application service based on a content of the reply to the first message dispatched from the second application service.

12. The method of claim 11, further including:
(j) storing a fourth set of response-callback bindings for a third message dispatched from either the first application service or the second application service to the client device;
(k) when the response-callback bindings stored in step (j) and either step (b) or step (h) do not have a conflict, assigning the respective first or third reply-to-address to the third message dispatched to the client device in step (j), otherwise assigning a fourth unallocated reply-to-address from the set unallocated reply-to-addresses to the third message dispatched to the client device in step (j); and
(l) in response to a reply from the client device to the third message, invoking a callback on the first application service or the second application service utilizing the reply-to-address assigned in step (k) and based on a content of the reply to the third message.

13. The method of claim 12, further including:
(m) storing a fifth set of response-callback bindings for a fourth message dispatched from the other of the first application service or the second application service to the client device;
(n) when the response-callback bindings stored in step (m) and either step (b), step (h), or step (j) do not have a conflict, assigning the respective first, third, or fourth reply-to-address to the fourth message dispatched to the client device in step (m), otherwise assigning a fifth unallocated reply-to-address from the set of unallocated reply-to-addresses to the fourth message dispatched to the client in step (m); and
(o) in response to a reply from the client device to the fourth message, invoking a callback on the other of the first application service or the second application service utilizing the reply-to-address assigned in step (n) and based on a content of the reply to the fourth message.

14. A system of session-based communications for enabling users of a two-way electronic messaging system to simultaneously interact with multiple applications, the system comprising:
an implementation service (131) adapted to assign a first unallocated reply-to address (703) from the set thereof to a first message (200, 710) dispatched from a first application service (141) to a client device (111); and
the client device and the implementation service, all being adapted to route a reply (200, 720) to the first message from the client device to the first application service utilizing the first reply-to address;
**characterized in that**
the implementation service is further adapted to assign a second unallocated reply-to address (728) from the set thereof to a second message (200, 740) dispatched from the first application service to the client device; and
the client device and the implementation service, all are further adapted to route a reply to the second message from the client device to the first application service utilizing the second reply-to address,
wherein:
the implementation service is adapted to store a first set of response-callback bindings for the first message dispatched from the first application service to the client device;
the implementation service is further adapted to invoke a callback, from the client device to the first application service, based on a content (720) of the reply to the first message from the first application service;
the implementation service is further adapted to store a second set of response-callback bindings for the second message dispatched from the first application service to the client device, wherein when the first set of response-callback bindings do not have a conflict with the second set of response-callback bindings, the second reply-to-address that is assigned to the second message dispatched from the first application service to the client device is the same as the first reply-to-address, otherwise, the second reply-to-address assigned to the second message dispatched from the first application service to the client device is different than the first reply-to-address; and
the implementation service is further adapted to invoke a callback, from the client device to the first application service, based on a content of the reply to the second message from the first application service.

15. The system of claim 14, further including:
the implementation service is further adapted to assign a third unallocated reply-to address from the set thereof to a first message dispatched from a second application service to the client device;
the implementation service is further adapted to route a reply to the first message from the second application service from the client device to the second application service utilizing the third reply-to address;
the implementation service is further adapted to assign a fourth unallocated reply-to address from the set thereof to a second message dispatched from the second application service to the client device; and
the implementation service is further adapted to route a reply to the second message from the second application service from the client device to the second application service utilizing the fourth reply-to address.

16. The system of claim 14, wherein the implementation service is further adapted to store a response-callback binding for each dispatched message, and to cause the reply to each dispatched message to invoke a callback on the first application service based on data included in the reply and the response-callback binding for said dispatched message.

## Patentansprüche

1. Verfahren zur sitzungsbasierten Kommunikation, um Benutzern eines bidirektionalen elektronischen Nachrichtensystems, das eine Client- Vorrichtung und einen ersten Anwendungsdienst umfasst, zu ermöglichen, gleichzeitig mit mehreren Anwendungen zu interagieren, wobei das Verfahren umfasst:
a) Speichern eines Satzes von nicht- allokierten Empfängeradressen, die frei zuweisbar sind;
b) Zuweisen (701 bis 703) einer ersten nicht- allokierten Empfängeradresse (703) aus deren Satz zu einer ersten Nachricht (200, 710), die von einem ersten Anwendungsdienst (141) zu einer Client- Vorrichtung (111) abgesetzt wird; und
c) Verkehrslenken (721 bis 725) einer Antwort (200, 720) auf die erste Nachricht unter Verwendung der in Schritt b) zugewiesenen Empfängeradresse;
**gekennzeichnet durch**:
d) Zuweisen (726 bis 728), nach Schritt b), einer zweiten nicht- allokierten Empfängeradresse (728) aus deren Satz zu einer zweiten Nachricht (200, 740), die von dem ersten Anwendungsdienst an die Client- Vorrichtung abgesetzt wird; und
e) Verkehrslenken, von der Client- Vorrichtung zu dem ersten Anwendungsdienst, einer Antwort auf die zweite Nachricht unter Verwendung der in Schritt d) zugewiesenen Empfängeradresse,
wobei:
Schritt b) Speichern eines ersten Satzes von Antwortrückrufbindungen für die erste Nachricht umfasst, die von dem ersten Anwendungsdienst an die Client- Vorrichtung abgesetzt wird;
Schritt c) Einleiten (721 bis 725) eines Rückrufs zu dem ersten Anwendungsdienst auf der Grundlage eines Inhalts (720) der Antwort auf die erste Nachricht von dem ersten Anwendungsdienst umfasst;
Schritt d) Speichern eines zweiten Satzes von Antwortrückrufbindungen für die zweite Nachricht umfasst, die von dem ersten Anwendungsdienst an die Client- Vorrichtung abgesetzt wird, wobei, falls der erste Satz von Antwortrückrufbindungen keinen Konflikt mit dem zweiten Satz von Antwortrückrufbindungen aufweist, die zweite Empfängeradresse, die der von dem ersten Anwendungsdienst an die Client-Vorrichtung abgesetzten zweiten Nachricht zugewiesen wird, die gleiche wie die erste Empfängeradresse ist, und andernfalls die zweite Empfängeradresse, die der von dem ersten Anwendungsdienst an die Client- Vorrichtung abgesetzten zweiten Nachricht zugewiesen wird, von der ersten Empfängeradresse verschieden ist; und
Schritt e) Einleiten eines Rückrufs an den ersten Anwendungsdienst auf der Grundlage eines Inhalts der Antwort auf die zweite Nachricht von dem ersten Anwendungsdienst umfasst.

2. Verfahren gemäß Anspruch 1, weiterhin umfassend:
f) Zuweisen einer dritten nicht- allokierten Empfängeradresse aus deren Satz zu einer von einem zweiten Anwendungsdienst an die Client- Vorrichtung abgesetzten ersten Nachricht; und
g) Verkehrslenken einer Antwort auf die erste Nachricht aus Schritt f) von der Client- Vorrichtung zu dem zweiten Anwendungsdienst unter Verwendung der in Schritt f) zugewiesenen Empfängeradresse.

3. Verfahren gemäß Anspruch 2, weiterhin umfassend:
h) Zuweisen, nach Schritt f), einer vierten nicht- allokierten Empfängeradresse von deren Satz zu einer von dem zweiten Anwendungsdienst an die Client- Vorrichtung abgesetzten zweiten Nachricht; und
i) Verkehrslenken einer Antwort auf die zweite Nachricht aus Schritt h) von der Client- Vorrichtung zu dem zweiten Anwendungsdienst unter Verwendung der in Schritt h) zugewiesenen Empfängeradresse.

4. Verfahren gemäß Anspruch 3, weiterhin umfassend:
j) Speichern eines dritten Satzes von Antwortrückrufbindungen für die von dem zweiten Anwendungsdienst an die Client- Vorrichtung abgesetzte erste Nachricht; und
k) in Reaktion auf eine Antwort von der Client- Vorrichtung auf die von dem zweiten Anwendungsdienst abgesetzte erste Nachricht, Einleiten eines Rückrufs an den zweiten Anwendungsdienst auf der Grundlage eines Inhalts der Antwort auf die von dem zweiten Anwendungsdienst abgesetzte erste Nachricht.

5. Verfahren gemäß Anspruch 4, weiterhin umfassend:
l) Speichern eines vierten Satzes von Antwortrückrufbindungen für eine dritte Nachricht, die von dem ersten Anwendungsdienst oder dem zweiten Anwendungsdienst an die Client- Vorrichtung abgesetzt wird;
m) falls die in Schritt I) und entweder Schritt b) oder Schritt j) gespeicherten Antwortrückrufbindungen keinen Konflikt aufweisen, Zuweisen der jeweiligen ersten oder dritten Empfängeradresse zu der in Schritt I) an die Client- Vorrichtung abgesetzten dritten Nachricht, und andernfalls Zuweisen einer vierten nicht- allokierten Empfängeradresse aus dem Satz nicht- allokierter Empfängeradressen zu der dritten Nachricht, die in Schritt I) an die Client- Vorrichtung abgesetzt wird; und
n) in Reaktion auf eine Antwort von der Client- Vorrichtung auf die dritte Nachricht, Einleiten eines Rückrufs bei dem ersten Anwendungsdienst oder dem zweiten Anwendungsdienst unter Verwendung der in Schritt m) zugewiesenen Empfängeradresse und auf der Grundlage eines Inhalts der Antwort auf die dritte Nachricht.

6. Verfahren gemäß Anspruch 5, weiterhin umfassend:
o) Speichern eines fünften Satzes von Antwortrückrufbindungen für eine vierte Nachricht, die von dem anderen des ersten Anwendungsdiensts oder des zweiten Anwendungsdiensts an die Client- Vorrichtung abgesetzt wird;
p) falls die in Schritt o) und entweder Schritt b), Schritt j) oder Schritt I) gespeicherten Antwortrückrufbindungen keinen Konflikt aufweisen, Zuweisen der jeweils ersten, dritten oder vierten Empfängeradresse zu der vierten Nachricht, die in Schritt o) an die Client- Vorrichtung abgesetzt wird, und andernfalls Zuweisen einer fünften nicht- allokierten Empfängeradresse aus dem Satz nicht- allokierter Empfängeradressen zu der vierten Nachricht, die in Schritt o) an den Client abgesetzt wird; und
q) in Reaktion auf eine Antwort von der Client- Vorrichtung auf die vierte Nachricht, Einleiten eines Rückrufs bei dem anderen des ersten Anwendungsdiensts oder des zweiten Anwendungsdiensts unter Verwendung der in Schritt p) zugewiesenen Empfängeradresse und auf der Grundlage eines Inhalts der Antwort auf die vierte Nachricht.

7. Verfahren gemäß Anspruch 1, weiterhin umfassend:
f) Speichern eines dritten Satzes von Antwortrückrufbindungen für eine dritte Nachricht, die von einem zweiten Anwendungsdienst an die Client- Vorrichtung abgesetzt wird;
g) Zuweisen einer dritten nicht- allokierten Empfängeradresse aus deren Satz zu der dritten Nachricht, die von dem zweiten Anwendungsdienst an die Client- Vorrichtung abgesetzt wird;
h) in Reaktion auf eine Antwort von der Client- Vorrichtung auf die dritte Nachricht von dem zweiten Anwendungsdienst, Einleiten eines Rückrufs bei dem zweiten Anwendungsdienst unter Verwendung der dritten Empfängeradresse und auf der Grundlage eines Inhalts der Antwort auf die dritte Nachricht von dem zweiten Anwendungsdienst;
i) Speichern eines vierten Satzes von Antwortrückrufbindungen für eine vierte Nachricht, die von dem zweiten Anwendungsdienst an die Client- Vorrichtung abgesetzt wird;
j) falls der dritte Satz von Antwortrückrufbindungen keinen Konflikt mit dem vierten Satz von Antwortrückrufbindungen aufweist, Zuweisen der dritten Empfängeradresse zu der vierten Nachricht, die von dem zweiten Anwendungsdienst an die Client- Vorrichtung abgesetzt wird, und andernfalls, Zuweisen einer vierten nichtallokierten Empfängeradresse aus dem Satz nicht- allokierter Empfängeradressen zu der vierten Nachricht, die von dem zweiten Anwendungsdienst an die Client- Vorrichtung abgesetzt wird; und
k) in Reaktion auf eine Antwort von der Client- Vorrichtung auf die vierte Nachricht von dem zweiten Anwendungsdienst, Einleiten eines Rückrufs bei dem zweiten Anwendungsdienst unter Verwendung der in Schritt j) zugewiesenen Empfängeradresse und auf der Grundlage eines Inhalts der Antwort auf die vierte Nachricht von dem zweiten Anwendungsdienst.

8. Verfahren gemäß Anspruch 1, wobei:
jede abgesetzte Nachricht erste Daten hinsichtlich des beabsichtigten Empfängers der Nachricht, Daten hinsichtlich der Anwendung, die die Nachricht ausgab, und Text umfasst; und
Schritt b) und Schritt d) jeweils umfassen:
Aufbauen, aus jeder abgesetzten Nachricht, einer Client- terminierten Nachricht, die den Text, die Empfängeradresse, die der abgesetzten Nachricht zugewiesen wurde, und die ersten Daten hinsichtlich des beabsichtigten Empfängers oder zweite Daten hinsichtlich des beabsichtigten Empfängers, die aus den ersten Daten hinsichtlich des beabsichtigten Empfängers abgeleitet werden, umfasst, aber die die Daten hinsichtlich der Anwendung ausschließt, die die Nachricht ausgab; und
Ausgeben der Client- terminierten Nachricht zur Zustellung des Texts der Client- termininerten Nachricht an die Client- Vorrichtung, die mit den ersten oder zweiten Daten hinsichtlich des beabsichtigten Empfängers verknüpft ist, wobei jeder abgesetzten Nachricht eine eindeutige Empfängeradresse zugewiesen wird, die einen Zustand zwischen der Client- terminierten Nachricht und einer Client- stämmigen Nachricht in Reaktion auf die Client- terminierte Nachricht aufrecht erhält.

9. Verfahren nach Anspruch 8, weiterhin umfassend:
Aufbauen, aus jeder Client- stämmigen Nachricht, einer zweiten Client- stämmigen Nachricht, die Daten in Reaktion auf den Text und die Empfängeradresse umfasst, die in der Client- terminierten Nachricht umfasst sind, die den gleichen Zustand wie die Client- stämmige Nachricht aufweist; und
Ausgeben jeder zweiten Client- stämmigen Nachricht zu deren Zustellung zu dem ersten Anwendungsdienst auf der Grundlage der Empfängeradresse, die von der zweiten Client- stämmigen Nachricht umfasst ist, die den gleichen Zustand wie die zweite Client- terminierte Nachricht aufweist.

10. Verfahren gemäß zumindest einem der vorstehenden Ansprüche, wobei die Empfängeradressen eine oder eines der folgenden sind:
E- Mail Adressen;
kurze Codes;
kurze Codes mit angehängten Suffixen oder Präfixen;
Telefonnummern; oder
Instant- Messaging-, IM, Adressen.

11. Verfahren gemäß Anspruch 2, weiterhin umfassend:
h) Speichern eines dritten Satzes von Antwortrückrufbindungen für die erste Nachricht, die von dem zweiten Anwendungsdienst an die Client- Vorrichtung abgesetzt wird; und
i) in Reaktion auf eine Antwort von der Client- Vorrichtung auf die von dem zweiten Anwendungsdienst abgesetzte erste Nachricht, Einleiten eines Rückrufs bei dem zweiten Anwendungsdienst auf der Grundlage eines Inhalts der Antwort auf die von dem zweiten Anwendungsdienst abgesetzte erste Nachricht.

12. Verfahren gemäß Anspruch 11, weiterhin umfassend:
j) Speichern eines vierten Satzes von Antwortrückrufbindungen für eine dritte Nachricht, die von dem ersten Anwendungsdienst oder dem zweiten Anwendungsdienst an die Client- Vorrichtung abgesetzt wird;
k) falls die in Schritt j) und entweder Schritt b) oder Schritt h) gespeicherten Antwortrückrufbindungen keinen Konflikt aufweisen, Zuweisen der jeweiligen ersten oder dritten Empfängeradresse zu der dritten Nachricht, die in Schritt j) an die Client-Vorrichtung abgesetzt wird, und andernfalls, Zuweisen einer vierten nicht- allokierten Empfängeradresse aus dem Satz nicht- allokierter Empfängeradressen zu der dritten Nachricht, die in Schritt j) an die Client- Vorrichtung abgesetzt wird; und
I) in Reaktion auf eine Antwort von der Client- Vorrichtung auf die dritte Nachricht, Einleiten eines Rückrufs bei dem ersten Anwendungsdienst oder dem zweiten Anwendungsdienst unter Verwendung der in Schritt k) zugewiesenen Empfängeradresse und auf der Grundlage eines Inhalts der Antwort auf die dritte Nachricht.

13. Verfahren gemäß Anspruch 12, weiterhin umfassend:
m) Speichern eines fünften Satzes von Antwortrückrufbindungen für eine vierte Nachricht, die von dem anderen des ersten Anwendungsdiensts oder des zweiten Anwendungsdiensts an die Client- Vorrichtung abgesetzt wird;
n) falls die in Schritt m) und entweder Schritt b), Schritt h) oder Schritt j) gespeicherten Antwortrückrufbindungen keinen Konflikt aufweisen, Zuweisen der jeweiligen ersten, dritten oder vierten Empfängeradresse zu der vierten Nachricht, die in Schritt m) an die Client- Vorrichtung abgesetzt wird, und andernfalls, Zuweisen einer fünften nicht- allokierten Empfängeradresse aus dem Satz nicht- allokierter Empfängeradressen an die vierte Nachricht, die in Schritt m) an den Client abgesetzt wird; und
o) in Reaktion auf eine Antwort von der Client- Vorrichtung auf die vierte Nachricht, Einleiten eines Rückrufs bei dem anderen des ersten Anwendungsdiensts oder des zweiten Anwendungsdiensts unter Verwendung der in Schritt n) zugewiesenen Empfängeradresse und auf der Grundlage eines Inhalts der Antwort auf die vierte Nachricht.

14. System zur sitzungsbasierten Kommunikation, um Benutzern eines bidirektional elektronischen Nachrichtensystems zu ermöglichen, gleichzeitig mit mehreren Anwendungen zu interagieren, wobei das System umfasst:
einen Implementierungsdienst (131), der eingerichtet ist, um eine erste nichtallokierte Empfängeradresse (703) aus deren Satz einer ersten Nachricht (200, 710) zuzuweisen, die von einem ersten Anwendungsdienst (141) zu einer Client- Vorrichtung (111) abgesetzt wird; und
die Client- Vorrichtung und den Implementierungsdienst, die alle eingerichtet sind, um eine Antwort (200, 720) auf die erste Nachricht von der Client- Vorrichtung zu dem ersten Anwendungsdienst unter Verwendung der ersten Empfängeradresse verkehrszulenken;
**dadurch gekennzeichnet, dass**
der Implementierungsdienst weiterhin eingerichtet ist, um eine zweite nichtallokierte Empfängeradresse (728) aus deren Satz einer zweiten Nachricht, (200, 740) zuzuweisen, die von dem ersten Anwendungsdienst an die Client- Vorrichtung abgesetzt wird; und
die Client- Vorrichtung und der Implementierungsdienst alle weiterhin eingerichtet sind, um eine Antwort auf die zweite Nachricht von der Client- Vorrichtung zu dem ersten Anwendungsdienst unter Verwendung der zweiten Empfängeradresse verkehrszulenken,
wobei:
der Implementierungsdienst eingerichtet ist, um einen ersten Satz von Antwortrückrufbindungen für die erste Nachricht zu speichern, die von dem ersten Anwendungsdienst an die Client- Vorrichtung abgesetzt wird;
der Implementierungsdienst weiterhin eingerichtet ist, um einen Rückruf von der Client- Vorrichtung zu dem ersten Anwendungsdienst auf der Grundlage eines Inhalts (720) der Antwort auf die erste Nachricht von dem ersten Anwendungsdienst einzuleiten;
der Implementierungsdienst weiterhin eingerichtet ist, um einen zweiten Satz von Antwortrückrufbindungen für die zweite Nachricht zu speichern, die von dem ersten Anwendungsdienst an die Client- Vorrichtung abgesetzt wird, wobei, falls der erste Satz von Antwortrückrufbindungen keinen Konflikt mit dem zweiten Satz von Antwortrückrufbindungen aufweist, die zweite Empfängeradresse, die der von dem ersten Anwendungsdienst an die Client- Vorrichtung abgesetzten zweiten Nachricht zugewiesen wird, die gleiche wie die erste Empfängeradresse ist, und andernfalls, die zweite Empfängeradresse, die der von dem ersten Anwendungsdienst an die Client-Vorrichtung abgesetzten zweiten Nachricht zugewiesen ist, von der ersten Empfängeradresse verschieden ist; und
der Implementierungsdienst weiterhin eingerichtet ist, einen Rückruf von der Client- Vorrichtung zu dem ersten Anwendungsdienst auf der Grundlage eines Inhalts der Antwort auf die zweite Nachricht von dem ersten Anwendungsdienst einzuleiten.

15. System gemäß Anspruch 14, weiterhin umfassend:
der Implementierungsdienst ist weiterhin eingerichtet, um eine dritte nichtallokierte Empfängeradresse aus deren Satz einer ersten Nachricht zuzuweisen, die von einem zweiten Anwendungsdienst an die Client- Vorrichtung abgesetzt wird;
der Implementierungsdienst ist weiterhin eingerichtet, um eine Antwort auf die erste Nachricht von dem zweiten Anwendungsdienst von der Client- Vorrichtung zu dem zweiten Anwendungsdienst unter Verwendung der dritten Empfängeradresse verkehrszulenken;
der Implementierungsdienst ist weiterhin eingerichtet, um eine vierte nichtallokierte Empfängeradresse aus deren Satz einer zweiten Nachricht zuzuweisen, die von dem zweiten Anwendungsdienst an die Client- Vorrichtung abgesetzt wird; und
der Implementierungsdienst ist weiterhin eingerichtet, um eine Antwort auf die zweite Nachricht von dem zweiten Anwendungsdienst von der Client- Vorrichtung zu dem zweiten Anwendungsdienst unter Verwendung der vierten Empfängeradresse verkehrszulenken.

16. System gemäß Anspruch 14, wobei der Implementierungsdienst weiterhin eingerichtet ist, um eine Antwortrückrufbindung für jede abgesetzte Nachricht zu speichern, und um die Antwort auf jede abgesetzte Nachricht zu veranlassen, einen Rückruf bei dem ersten Anwendungsdienst auf der Grundlage von in der Antwort enthaltenen Daten und der Antwortrückrufbindung für die abgesetzte Nachricht einzuleiten.

## Revendications

1. Procédé de communication basé sur des sessions destiné à permettre à des utilisateurs d'un système de messagerie électronique bidirectionnelle comprenant un dispositif client et un premier service d'application, d'interagir simultanément avec de multiples applications, le procédé comprenant :
(a) la mémorisation d'un ensemble d'adresses de réponse non attribuées qui peuvent être attribuées librement ;
(b) l'attribution (701 à 703) d'une première adresse de réponse non attribuée (703) à partir de l'ensemble de celles-ci à un premier message (200, 710) expédié depuis un premier service d'application (141) vers un dispositif client (111) ; et
(c) l'acheminement (721 à 725) d'une réponse (200, 720) vers le premier message en utilisant l'adresse de réponse attribuée à l'étape (b) ;
**caractérisé par** :
(d) à la suite de l'étape (b), l'attribution (726 à 728) d'une deuxième adresse de réponse non attribuée (728) à partir d'un ensemble de celles-ci à un deuxième message (200, 740) expédié depuis le premier service d'application vers le dispositif client ; et
(e) l'acheminement, à partir du dispositif client vers le premier service d'application, d'une réponse au deuxième message en utilisant l'adresse de réponse attribuée à l'étape (d),
dans lequel :
l'étape (b) comprend la mémorisation d'un premier ensemble d'associations réponse-rappel pour le premier message expédié depuis le premier service d'application vers le dispositif client ;
l'étape (c) comprend l'évocation (721 à 725) d'une procédure de rappel vers le premier service d'application sur la base d'un contenu (720) de la réponse au premier message provenant du premier service d'application ;
l'étape (d) comprend la mémorisation d'un deuxième ensemble d'associations réponse-rappel pour le deuxième message expédié depuis le premier service d'application vers le dispositif client, dans lequel lorsque le premier ensemble d'associations réponse-rappel ne présente pas de conflit avec le deuxième ensemble d'associations réponse-rappel, la deuxième adresse de réponse qui est attribuée au deuxième message expédié depuis le premier service d'application dans le dispositif client est la même que la première adresse de réponse, sinon, la deuxième adresse de réponse attribuée au deuxième message expédié depuis le premier service d'application vers le dispositif client est différente de la première adresse de réponse ; et
l'étape (e) comprend l'évocation d'une procédure de rappel vers le premier service d'application, sur la base d'un contenu de la réponse au deuxième message provenant du premier service d'application.

2. Procédé selon la revendication 1, comprenant en outre :
(f) l'attribution d'une troisième adresse de réponse non attribuée à partir de l'ensemble de celles-ci à un premier message expédié depuis un deuxième service d'application vers le dispositif client ; et
(g) l'acheminement d'une réponse au premier message de l'étape (f) depuis le dispositif client vers le deuxième service d'application en utilisant l'adresse de réponse attribuée à l'étape (f).

3. Procédé selon la revendication 2, comprenant en outre :
(h) à la suite de l'étape (f), l'attribution d'une quatrième adresse de réponse non attribuée à partir de l'ensemble de celles-ci à un deuxième message expédié depuis le deuxième service d'application vers le dispositif client ; et
(i) l'acheminement d'une réponse au deuxième message de l'étape (h) depuis le dispositif client vers le deuxième service d'application en utilisant l'adresse de réponse attribuée à l'étape (h).

4. Procédé selon la revendication 3, comprenant en outre :
(j) la mémorisation d'un troisième ensemble d'associations réponse-rappel pour le premier message expédié depuis le deuxième service d'application vers le dispositif client ; et
(k) en réponse à une réponse depuis le dispositif client au premier message expédié depuis le deuxième service d'application, l'évocation d'une procédure de rappel sur le deuxième service d'application sur la base d'un contenu de la réponse au premier message expédié depuis le deuxième service d'application.

5. Procédé selon la revendication 4, comprenant en outre :
(l) la mémorisation d'un quatrième ensemble d'associations réponse-rappel pour un troisième message expédié soit depuis le premier service d'application soit depuis le deuxième service d'application vers le dispositif client ;
(m) lorsque les associations réponse-rappel mémorisées à l'étape (l) et l'une ou l'autre parmi l'étape (b) ou l'étape (j) ne présentent pas de conflit, l'attribution de la première ou troisième adresse de réponse respective au troisième message expédié vers le dispositif client à l'étape (l), sinon, l'attribution d'une quatrième adresse de réponse non attribuée à partir de l'ensemble d'adresses de réponse non attribuées au troisième message expédié vers le dispositif client à l'étape (l) ; et
(n) en réponse à une réponse provenant du dispositif client au troisième message, l'évocation d'une procédure de rappel sur le premier service d'application ou le deuxième service d'application en utilisant l'adresse de réponse attribuée à l'étape (m) et sur la base d'un contenu de la réponse au troisième message.

6. Procédé selon la revendication 5, comprenant en outre :
(o) la mémorisation d'un cinquième ensemble d'associations réponse-rappel pour un quatrième message expédié depuis l'autre parmi le premier service d'application ou le deuxième service d'application vers le dispositif client ;
(p) lorsque les associations réponse-rappel mémorisées à l'étape (o) et l'une ou l'autre parmi l'étape (b), l'étape (j) ou l'étape (l) ne présentent pas de conflit, l'attribution de la première, troisième ou quatrième adresse de réponse respective au quatrième message expédié vers le dispositif client à l'étape (o), sinon, l'attribution d'une cinquième adresse de réponse non attribuée à partir de l'ensemble des adresses de réponse non attribuées au quatrième message expédié vers le dispositif client à l'étape (o) ; et
(q) en réponse à une réponse provenant du dispositif client au quatrième message, l'évocation d'une procédure de rappel sur l'autre parmi le premier service d'application ou le deuxième service d'application en utilisant l'adresse de réponse attribuée à l'étape (p) et sur la base d'un contenu de la réponse au quatrième message.

7. Procédé selon la revendication 1, comprenant en outre :
(f) la mémorisation d'un troisième ensemble d'associations réponse-rappel pour un troisième message expédié depuis un deuxième service d'application vers le dispositif client ;
(g) l'attribution d'une troisième adresse de réponse non attribuée à partir de l'ensemble de celles-ci au troisième message expédié depuis le deuxième service d'application vers le dispositif client ;
(h) en réponse à une réponse provenant du dispositif client au troisième message depuis le deuxième service d'application, l'évocation d'une procédure de rappel sur le deuxième service d'application en utilisant la troisième adresse de réponse et sur la base d'un contenu de la réponse au troisième message depuis le deuxième service d'application ;
(i) la mémorisation d'un quatrième ensemble d'associations réponse-rappel pour un quatrième message expédié depuis le deuxième service d'application vers le dispositif client ;
(j) lorsque le troisième ensemble d'associations réponse-rappel ne présente pas de conflit avec le quatrième ensemble d'associations réponse-rappel, l'attribution de la troisième adresse de réponse au quatrième message expédié depuis le deuxième service d'application vers le dispositif client, sinon, l'attribution d'une quatrième adresse de réponse non attribuée à partir de l'ensemble des adresses de réponse non attribuées au quatrième message expédié depuis le deuxième service d'application vers le dispositif client ; et
(k) en réponse à une réponse provenant du dispositif client au quatrième message depuis le deuxième service d'application, l'évocation d'une procédure de rappel sur le deuxième service d'application en utilisant l'adresse de réponse attribuée à l'étape (j) et sur la base d'un contenu de la réponse au quatrième message depuis le deuxième service d'application.

8. Procédé selon la revendication 1, dans lequel :
chaque message expédié comprend des premières données concernant le destinataire prévu du message, des données concernant l'application qui délivre le message, et du texte ; et
les étapes (b) et (d) comprennent chacune :
la construction à partir de chaque message expédié d'un message entrant client qui comprend le texte, l'adresse de réponse qui a été attribuée au message expédié, et soit les premières données concernant le destinataire prévu soit les deuxièmes données concernant le destinataire prévu dérivées des premières données concernant le destinataire prévu, mais qui excluent les données concernant l'application qui délivre le message ; et
la sortie du message entrant client pour délivrer le texte du message entrant client vers le dispositif client associé aux premières ou deuxièmes données concernant le destinataire prévu, dans lequel chaque message expédié est attribué à une adresse de réponse unique qui maintient un état entre le message entrant client et un message sortant client en réponse au message entrant client.

9. Procédé selon la revendication 8, comprenant en outre :
la construction à partir de chaque message sortant client d'un deuxième message sortant client qui comprend des données en réponse au texte et l'adresse de réponse au contenu dans le message entrant client qui présente le même état que le message sortant client ; et
la sortie de chaque deuxième message sortant client pour délivrer celui-ci vers le premier service d'application sur la base de l'adresse de réponse contenue dans le deuxième message sortant client qui présente le même état que le deuxième message entrant client.

10. Procédé selon l'une quelconque des revendications ci-dessus, dans lequel les adresses de réponse sont l'une parmi ce qui suit :
des adresses e-mail ;
des codes courts ;
des codes courts avec des suffixes ou préfixes annexés ;
des numéros de téléphone ; ou
des adresses de messagerie instantanée IM.

11. Procédé selon la revendication 2, comprenant en outre :
(h) la mémorisation d'un troisième ensemble d'associations réponse-rappel pour le premier message expédié depuis le deuxième service d'application vers le dispositif client ; et
(i) en réponse à une réponse provenant du dispositif client au premier message expédié depuis le deuxième service d'application, l'évocation d'une procédure de rappel sur le deuxième service d'application sur la base d'un contenu de la réponse au premier message expédié depuis le deuxième service d'application.

12. Procédé selon la revendication 11, comprenant en outre :
(j) la mémorisation d'un quatrième ensemble d'associations réponse-rappel pour un troisième message expédié depuis soit le premier service d'application soit le deuxième service d'application vers le dispositif client ;
(k) lorsque les associations réponse-rappel mémorisées à l'étape (j) et l'une ou l'autre parmi l'étape (b) ou l'étape (h) ne présentent pas de conflit, l'attribution de la première ou troisième adresse de réponse respective au troisième message expédié depuis le dispositif client à l'étape (j), sinon, l'attribution d'une quatrième adresse de réponse non attribuée à partir de l'ensemble des adresses de réponse non attribuées au troisième message expédié vers le dispositif client à l'étape (j) ; et
(l) en réponse à une réponse provenant du dispositif client au troisième message, l'évocation d'une procédure de rappel sur le premier service d'application ou le deuxième service d'application en utilisant l'adresse de réponse attribuée à l'étape (k) et sur la base d'un contenu de la réponse au troisième message.

13. Procédé selon la revendication 12, comprenant en outre :
(m) la mémorisation d'un cinquième ensemble d'associations réponse-rappel pour un quatrième message expédié depuis l'autre parmi le premier service d'application et le deuxième service d'application vers le dispositif client ;
(n) lorsque les associations réponse-rappel mémorisées à l'étape (m) et l'une ou l'autre parmi l'étape (b), l'étape (h), ou l'étape (j) ne présentent pas de conflit, l'attribution de la première, troisième ou quatrième adresse de réponse respective au quatrième message expédié vers le dispositif client à l'étape (m), sinon, l'attribution d'une cinquième adresse de réponse non attribuée à partir de l'ensemble des adresses de réponse non attribuées au quatrième message expédié vers le dispositif client à l'étape (m) ; et
(o) en réponse à une réponse provenant du dispositif client au quatrième message, l'évocation d'une procédure de rappel sur l'autre parmi le premier service d'application ou le deuxième service d'application en utilisant l'adresse de réponse attribuée à l'étape (n) et sur la base d'un contenu de la réponse au quatrième message.

14. Système de communication basé sur des sessions destiné à permettre à des utilisateurs d'un système de messagerie électronique bidirectionnelle d'interagir simultanément avec de multiples applications, le système comprenant :
un service de mise en oeuvre (131) adapté pour attribuer une première adresse de réponse non attribuée (703) à partir de l'ensemble de celles-ci à un premier message (200, 710) expédié depuis un premier service d'application (141) vers un dispositif client (111) ; et
le dispositif client et le service de mise en oeuvre, étant tous adaptés pour acheminer une réponse (200, 720) au premier message depuis le dispositif client vers le premier service d'application en utilisant la première adresse de réponse ;
**caractérisé en ce que**
le service de mise en oeuvre est en outre adapté pour attribuer une deuxième adresse de réponse non attribuée (728) à partir de l'ensemble de celles-ci à un deuxième message (200, 740) expédié depuis le premier service d'application vers le dispositif client ; et
le dispositif client et le service de mise en oeuvre sont en outre tous adaptés pour acheminer une réponse au deuxième message depuis le dispositif client vers le premier service d'application en utilisant la deuxième adresse de réponse,
dans lequel :
le service de mise en oeuvre est adapté pour mémoriser un premier ensemble d'associations réponse-rappel pour le premier message expédié depuis le premier service d'application vers le dispositif client ;
le service de mise en oeuvre est en outre adapté pour évoquer une procédure de rappel, à partir du dispositif client vers le premier service d'application, sur la base d'un contenu (720) de la réponse au premier message provenant du premier service application ;
le service de mise en oeuvre est en outre adapté pour mémoriser un deuxième ensemble d'associations réponse-rappel pour le deuxième message expédié depuis le premier service d'application vers le dispositif client, dans lequel, lorsque le premier ensemble d'associations réponse-rappel ne présente pas de conflit avec le deuxième ensemble d'associations réponse-rappel, la deuxième adresse de réponse qui est attribuée au deuxième message expédié depuis le premier service d'application vers le dispositif client est la même que la première adresse de réponse, sinon, la deuxième adresse de réponse attribuée au deuxième message expédié depuis le premier service d'application vers le dispositif client est différente de la première adresse de réponse ; et
le service de mise en oeuvre est en outre adapté pour évoquer une procédure de rappel, depuis le dispositif client vers le premier service d'application, sur la base d'un contenu de la réponse au deuxième message provenant du premier service d'application.

15. Système selon la revendication 14, comprenant en outre :
le service de mise en oeuvre qui est en outre adapté pour attribuer une troisième adresse de réponse non attribuée à partir de l'ensemble de celles-ci à un premier message expédié depuis un deuxième service d'application vers le dispositif client ;
le service de mise en oeuvre qui est en outre adapté pour acheminer une réponse au premier message provenant du deuxième service d'application depuis le dispositif client vers le deuxième service d'application en utilisant la troisième adresse de réponse ;
le service de mise en oeuvre qui est en outre adapté pour attribuer une quatrième adresse de réponse non attribuée à partir de l'ensemble de celles-ci à un deuxième message expédié depuis le deuxième service d'application vers le dispositif client ; et
le service de mise en oeuvre qui est en outre adapté pour acheminer une réponse au deuxième message provenant du deuxième service d'application depuis le dispositif client vers le deuxième service d'application en utilisant la quatrième adresse de réponse.

16. Système selon la revendication 14, dans lequel le service de mise en oeuvre est en outre adapté pour mémoriser une association réponse-rappel pour chaque message expédié, et pour amener la réponse à chaque message expédié à évoquer une procédure de rappel sur le premier service d'application sur la base des données contenues dans la réponse et l'association réponse-rappel pour ledit message expédié.
